# EUROPEAN PATENT APPLICATION

(11) **EP 4 207 022 A1**
(43) Date of publication of application: **05.07.2023**
(21) Application number: 21869480.0
(22) Date of filing: 21.09.2021
(51) Int. Cl.: G06Q 10/10, G06Q 50/10

(54) **CONFERENCE MANAGEMENT SYSTEM, EXHIBITION SYSTEM, ONLINE ASSOCIATION MANAGEMENT SYSTEM, ONLINE EVENT HANDOUT PROVISION SYSTEM, AND HANDOUT DELIVERY SYSTEM**

(30) Priority: 18.09.2020 JP 2020157276; 04.12.2020 JP 2020202198; 27.05.2021 JP 2021089493
(71) Applicant: Kabushiki Kaisha Kangaeru-Gakkou, Tokyo, 108-0074 (JP)
(72) Inventor: KASHINO, Toshihiko, Tokyo 108-0074 (JP)
(74) Representative: Bergenstråhle & Partners AB
(86) International application number: PCT/JP2021/034638
(87) International publication number: WO 2022/059798

(57) **Abstract**

An exhibition institution, such as a support company, can define a specific action favorable to the exhibition institution, and only a participant having made the specific action is allowed to receive a novelty from the exhibition institution. This increases opportunities for matching the exhibition institution and the participant with each other. An exhibition institution who exhibits products at an online exhibition can define a condition for receiving a novelty provided by the exhibition institution, as a specific action, so that only a participant having made the specific action is allowed to receive the novelty from the exhibition institution.

## Description

### Technical Field

The present invention relates to a conference management system, an exhibition system, an online academic conference management system, an online event handout providing system, and a handout delivery system.

### Background Art

### (Prior Art 1)

Holding a scientific-society-hosted academic lecture requires preparation of conference holding information and preparation for contacting individuals concerned by e-mail.

Specifically, in preparation for holding a conference (symposium or the like), a program is set for each theme (session). A conference manager creates, for each session, conference holding information including a session chairperson, a presenter of each program, an abstract of each program, and the like, and informs individuals who want to participate the conference of the information. At the same time, the conference manager communicates with each presenter (session chairperson, program presenter) by e-mail while confirming the progress of a presentation made by each presenter.

Conventionally, preparation work for creating conference holding information and preparation work for e-mailing each presenter are carried out separately by different systems. E-mail text sent to each presenter varies, depending on the role of the presenter and the current progress status of a presentation by the presenter. In addition, the e-mail text needs to be changed in content for each program. Creating the e-mail text is thus extremely troublesome and requires much manual work and time, which makes the efficiency of the conference holding preparation work low.

Patent Literature 1 (Japanese Patent Application Laid-Open No. 2006-11796) discloses an invention according to which e-mails for invitation to a conference are automatically created, based on information stored in a schedule storage unit.

### (Prior Art 2)

At a scientific-society-hosted academic lecture, a plurality of companies may exhibit booths as support companies. At the scientific-society-hosted academic lecture, personnel from the support companies explain the latest product information and services to participants, such as doctors who are members of the medical society.

However, information provided by these company includes not only the information that may be disclosed to the public but also specific display information (premium information) that the companies do not want to disclose to rival companies who participate in the lecture.

Patent Literature 2 (Japanese Patent Application Laid-Open No. 2004-318452) discloses an invention according to which in an electronic commerce transaction between companies, when an access authority determining server receives a request for access to business data from a requester, the server determines whether the requester has an access right, based on company information and access restriction information on the requester, and determines whether or not to provide the business data, according to a result of the determination.

### (Prior Art 3)

At the scientific-society-hosted academic lecture, a support company distributes a novelty to the participants. This is done for the purpose of letting target participants, who might become clients to the company, know the company's name, brand, and products.

A target participant, who might become a client to the company, is a participant who has made a specific action advantageous to the support company (exchanging business cards, filling in questionnaires, participating in sessions carrying the company's advertisements, or the like)

Patent Literature 3 (Japanese Patent Application Laid-Open No. 2001-265993) discloses an invention according to which points corresponding to the frequency of clicking on an advertisement posted on a web page are given to a member and an incentive (prizes, gift, etc.) corresponding to the number of points is given to the member.

### (Prior Art 4)

In a conventional system that manages an online event, such as an online academic conference, a management screen is set for each event (academic conference).

In such a conventional system, a management screen is set for each participant company.

Patent Literature 4 (Japanese Patent Application Laid-Open No. 2003-263444) discloses an invention according to which input of a user ID and a password from a company terminal device is accepted to carry out user authentication and an exhibited product registration/exhibited product input screen is displayed on the company terminal device.

### SUMMARY OF INVENTION

### Technical Problem

An object of a first invention is to improve the efficiency of conference holding preparation work by automatically creating a contact document for each presenter.

An object of a second invention is to disclose specific display information to only the participant with whom a company wants to provide the information in an online event in which the company exhibits or displays its products, thereby increasing matching opportunities, and at the same time, suppress leakage of the specific display information to a rival company or the like.

An object of a third invention is to allow an exhibition institution, such as a support company, to define a specific action advantageous to the exhibition institution and allow only the participant having made the specific action to receive a novelty from the exhibition institution, thereby increasing opportunities for matching up the exhibition institution and the participant with each other.

An object of a fourth invention is to build an online academic conference management system that allows a user who participate in a plurality of online academic conferences to easily participate in the conferences and to efficiently handle information.

An object of a fifth invention is to build an online academic conference management system that when users belonging to a plurality of companies form a group and participate in an online academic conference, allows the group of users to efficiently handling information. Solution to Problem

A first aspect is a conference management system including: a conference holding information input unit that inputs conference holding information on a conference preparation screen, the conference holding information including content of a conference, and the name of a presenter and a role of the presenter at the conference; a conference holding screen generating unit that generates a conference holding screen, based on the conference holding information inputted by the conference holding information input unit; a preparation status updating unit that updates a preparation status of the presenter; a contact document generating unit that generates a contact document according to the role of the presenter and the preparation status of the presenter, based on the conference holding information inputted by the conference holding information input unit and on the preparation status of the presenter updated by the preparation status updating unit; and a transmitting unit that transmits the contact document generated by the contact document generating unit, to a corresponding presenter.

A second aspect is an exhibition system including: a setting unit that sets a display condition in association with an attribute of a participant, the display condition being a condition under which an exhibition institution displays specific display information on the participant's terminal; a receiving unit that receives a display request for the specific display information from a participant; an acquiring unit that acquires an attribute of the participant whose display request is received by the receiving unit; a determining unit that determines that a display condition associated with the attribute of the participant acquired by the acquiring unit is satisfied; and a display control unit that when the determining unit determines that the display condition is satisfied, displays the specific display information on the participant's terminal.

A third aspect is an exhibition system including: a recording unit that records an action a participant has made to an exhibition institution, the action being recorded in association with the participant; a novelty reception condition receiving unit that receives a specific action from the exhibition institution, the specific action being defined as a reception condition for receiving a novelty provided by the exhibition institution; a reception request receiving unit that receives a reception request for receiving the novelty, from a participant; a determining unit that based on record content of the recording unit, determines that a participant whose reception request for receiving the novelty has been received satisfies the reception condition for receiving the novelty; and a reception right granting unit that when the determining unit determines that the participant whose reception request for receiving the novelty has been received satisfies the reception condition for receiving the novelty, grants the participant a right for receiving the novelty.

A fourth aspect is an online academic conference management system that manages a plurality of online academic conferences. The system including: a user information acquiring unit that acquires user information; a participation information acquiring unit that for each online academic conference, acquires information on a participation authority of a user who participates in the online academic conference; and a display control unit that displays management information on a user's terminal according to a participation authority of the user, in such a way as to associate the management information with a plurality of online academic conferences in which the user participates.

A fifth aspect is the online academic conference management system according to the fourth aspect. In the system, the display control unit causes a user's terminal to display a list management screen showing a list of management information on a plurality of online academic conferences in which the user participates and a separate management screen showing management information on a separate online academic conference in which the user participates.

A sixth aspect is an online academic conference management system that manages a plurality of online academic conferences. The system including: a user information acquiring unit that acquires user information; a participation information acquiring unit that for each online academic conference, acquires information on a participation authority, the information indicating that a user participating in the online academic conference is an exhibitor making up an exhibition institution, and information on an affiliation institution to which each exhibitor making up the exhibition institution belongs; and a display control unit that displays management information on a user's terminal according to a participation authority of the user, the management information including information on an exhibition institution, on each exhibitor making up the exhibition institution, and on an affiliation institution to which each exhibitor belongs, in such a way as to associate the management information with an online academic conference the user participates in.

A seventh aspect is the online academic conference management system according to the sixth aspect. In the system, the display control unit causes a user's terminal to display a list management screen showing a list of management information on a plurality of online academic conferences in which the user participates and a separate management screen showing management information on a separate online academic conference in which the user participates.

An eighth aspect is an online academic conference management system that manages a plurality of online academic conferences. The system includes an information processing unit that generates management information as information that can be displayed on a user's terminal, the management information being displayed according to a participation authority of the user and being associated with a plurality of online academic conferences, using user information and information on the participation authority of the user for participating in each online academic conference.

A ninth aspect is an online academic conference management system that manages a plurality of online academic conferences. The system include an information processing unit that generates management information as information that can be displayed on a user's terminal, the management information being provided according to a participation authority of the user, being associated with an online academic conference in which the user participates, and including information on an exhibition institution, on each exhibitor making up the exhibition institution, and on an affiliation institution to which each exhibitor belongs, using user information, information on the participation authority indicating that the user is an exhibitor making up the exhibition institution, and information on the affiliation institution to which each exhibitor making up the exhibition institution belongs.

A tenth aspect is an online event handout providing system in which a provider participant that provides a handout grants a recipient candidate participant a right to receive the handout. The system includes: a receiving candidate participant attribute acquiring unit that acquires an attribute of the recipient candidate participant; an action acquiring unit that in association with the recipient candidate participant, acquires an action the recipient candidate participant has made to the provider participant; a handout reception right storage unit that stores a right to receive the handout, according to the attribute of the recipient candidate participant and content of the action; a reception right grant request receiving unit that receives a request for being granted a right to receive the handout, from the recipient candidate participant; and a reception right granting unit that takes out the right to receive the handout, from the handout reception right storage unit, the right to receive the handout corresponding to the attribute of the recipient candidate participant acquired according to the recipient candidate participant whose request for being granted the right to receive the handout has been received by the reception right grant request receiving unit and to the content of the action acquired in association with the recipient candidate participant, and grants the recipient candidate participant the right to receive the handout.

An eleventh aspect is the online event handout providing system according to the tenth aspect. The system includes a handout notice/handout reception screen display control unit that displays a handout notice/handout reception screen on a display screen of a recipient candidate participant's terminal, the handout notice/handout reception screen being used to notice the recipient candidate participant of a handout a provider participant provides to the recipient candidate participant and/or to receive a reception request for receiving the handout, from the recipient candidate participant. According to a recipient candidate participant attribute of the recipient candidate participant, the handout notice/handout reception screen display control unit controls the presence/absence of display of the handout notice/handout reception screen on the display screen of the recipient candidate participant's terminal.

A twelfth aspect is the is the online event handout providing system according to the tenth aspect or the eleventh aspect. The system includes a handout list screen display control unit that displays a handout list screen on a recipient candidate participant's terminal, the handout list screen showing a list of handouts a provider participant provides to the recipient candidate participant. According to a recipient candidate participant attribute of the recipient candidate participant, the handout list screen display control unit controls displayed content of the handout list screen displayed on a display screen of the recipient candidate participant's terminal or the presence/absence of display of the handout list screen on the display screen of the recipient candidate participant's terminal.

A thirteenth aspect is an online event handout providing system in which a provider participant who provides a handout grants a recipient candidate participant a right to receive the handout. The system includes: an expected contribution degree acquiring unit that acquires an expected contribution degree indicating a degree of expected contribution the recipient candidate participant makes to the provider participant; a contribution degree acquiring unit that according to content of an action the recipient candidate participant has made to the provider participant, acquires a contribution degree indicating a degree of contribution the recipient candidate participant makes to the provider participant, in association with the recipient candidate participant; a handout reception right storage unit storing rights to receive the handout that are associated with a plurality of levels in accordance with the expected contribution degree and the contribution degree; a reception right grant request receiving unit that receives a request for being granted a right to receive the handout, from the recipient candidate participant; and a reception right granting unit that takes out a right to receive the handout, from the handout reception right storage unit, the right to receive the handout being at a level corresponding to an expected contribution degree acquired in associated with the recipient candidate participant whose request for being granted the right to receive the handout has been received by the reception right grant request receiving unit and to a contribution degree acquired in associated with the recipient candidate participant, and grants the recipient candidate participant the right to receive the handout at the level corresponding to the expected contribution degree and the contribution degree.

A fourteenth aspect is the online event handout providing system according to the thirteenth aspect. In the system, the expected contribution degree is classified into a plurality of rank categories according to attributes of recipient candidate participants.

A fifteenth aspect is the online event handout providing system according to the thirteenth aspect or the fourteenth aspect. The system includes a handout notice/handout reception screen display control unit that displays a handout notice/handout reception screen on a display screen of a recipient candidate participant's terminal, the handout notice/handout reception screen being used to notice the recipient candidate participant of a handout a provider participant provides to the recipient candidate participant and/or to receive a reception request for receiving the handout, from the recipient candidate participant.

According to an expected contribution degree of the recipient candidate participant, the handout notice/handout reception screen display control unit controls the presence/absence of display of the handout notice/handout reception screen on the display screen of the recipient candidate participant's terminal.

A sixteenth aspect is the online event handout providing system according to any one of the thirteenth aspect to the fifteenth aspect. The system includes a handout list screen display control unit that displays a handout list screen on a recipient candidate participant's terminal, the handout list screen showing a list of handouts a provider participant provides to the recipient candidate participant. According to an expected contribution degree of the recipient candidate participant, the handout list screen display control unit controls a display level of the handout list screen displayed on a display screen of the recipient candidate participant's terminal or the presence/absence of display of the handout list screen on the display screen of the recipient candidate participant's terminal.

A seventeenth aspect is an online event handout delivery system including: a display device of a provider participant's terminal that displays a handout registration screen for registering a handout provided in an online event; a display device of a recipient candidate participant's terminal that displays a handout list screen showing a list of registered handouts, the list having a reception condition associated with the handouts, and a handout reception screen for receiving a reception request for receiving a handout, from the recipient candidate participant; and a display device of a delivery operator's terminal that displays a delivery list screen showing a handout list that is a list of handouts for which a reception condition is satisfied, the handout list having information on a delivery destination associated therewith for delivering a handout to the delivery destination.

### Advantageous Effects of Invention

According to the first aspect, a contact document for each presenter is automatically created. Compared with a case where the present conference management system is not adopted, therefore, the efficiency of conference holding preparation work is improved.

According to the second aspect, in an event in which a company exhibits or displays its products online, specific display information is disclosed only to the participant with whom the company wants to provide the specific display information. Compared with a case where the present exhibition system is not adopted, therefore, matching opportunities are increased and at the same time, leakage of the specific display information to a rival company or the like can be suppressed.

According to the third aspect, an exhibition institution, such as a support company, can define a specific action favorable to the exhibition institution, and only the participant having made the specific action is allowed to receive a novelty from the exhibition institution. Compared with a case where the present exhibition system is not adopted, therefore, opportunities for matching up the exhibition institution and the participant with each other are increased.

According to the fourth aspect, the fifth aspect, and the eighth aspect, a user who participate in a plurality of online academic conferences is able to easily participate in the conferences and handle information efficiently.

According to the sixth aspect, the seventh aspect, and the ninth aspect, when users belonging to a plurality of companies form a group and participate in an online academic conference, the users are able to handle information efficiently.

According to the tenth aspect to the sixteenth aspect, when an event is held, costs required for handouts are reduced to the minimum in comparison with a conventional case, and at the same time, opportunities for interactions, matching up, etc., between a handout provider and a handout recipient can be increased to the maximum.

According to the seventeenth aspect, when an event is held, burdens involved in selecting handouts, carrying handouts into a venue, distributing handouts to participants, and bringing handouts home are reduced, compared with a conventional case. This advantageous effect is obtained by the seventeenth aspect.

### BRIEF DESCRIPTION OF DRAWINGS

Fig. 1 is a diagram exemplarily showing a configuration of a conference management system according to a first embodiment and a configuration of an exhibition system according to a second embodiment and a third embodiment.
Fig. 2 is a block diagram exemplarily showing a hardware configuration of a system manager's terminal, of a presenter's terminal, of a participant's terminal, of an exhibition institution's terminal, and of a server according to each embodiment.
Fig. 3 is a block diagram exemplarily showing a functional configuration of the conference management system according to the first embodiment.
Fig. 4 is a block diagram exemplarily showing a functional configuration of the exhibition system according to the second embodiment.
Fig. 5 is a block diagram exemplarily showing a functional configuration of the exhibition system according to the third embodiment.
Fig. 6 is a diagram exemplarily showing a conference holding screen.
Fig. 7 is a diagram exemplarily showing a conference holding screen.
Fig. 8 is a diagram exemplarily showing a conference preparation screen.
Fig. 9 is a diagram exemplarily showing a conference preparation screen for presenter.
Fig. 10 is a diagram exemplarily showing a company-side management screen.
Fig. 11 is a diagram exemplarily showing a company information screen.
Fig. 12 is a diagram exemplarily showing a novelty reception request receiving screen.
Fig. 13 is a block diagram exemplarily showing a functional configuration of an online academic conference management system according to a fourth embodiment.
Fig.14(A) and 14(B) are tables showing participants information.
Fig. 15 is a diagram showing an exhibition institution information screen for a first exhibition institution.
Fig. 16 is a diagram showing an exhibition institution information screen for a second exhibition institution.
Fig. 17 is a diagram showing an exhibition institution information screen for an exhibition institution participating in a different conference.
Fig. 18 is a diagram exemplarily showing a separate management screen separately displaying conference management information.
Fig. 19 is a diagram exemplarily showing a list management screen displaying a list of management information on a plurality of conferences.
Fig. 20 is a block diagram exemplarily showing a functional configuration of an online event handout providing system according to a fifth embodiment.
Fig. 21 is a table showing data stored in a handout reception right storage unit of the fifth embodiment and data for display control.
Fig. 22 is a diagram exemplarily showing a handout notice/reception/list screen.
Fig. 23 is a diagram exemplarily showing a handout notice/reception/list screen.
Fig. 24 is a table showing data stored in a handout reception right storage unit of a sixth embodiment and data for display control.
Fig. 25 is a block diagram exemplarily showing a functional configuration of an online event handout providing system according to the sixth embodiment.
Fig. 26A is a diagram showing a handout registration screen displayed on a display screen of a display device of an exhibition institution's terminal on a provider participant side.
Fig. 26B is a diagram showing a handout registration screen displayed on the display screen of the display device of the exhibition institution's terminal on the provider participant side.
Fig. 26C is a diagram exemplarily showing a handout registration screen.
Fig. 27 is a diagram exemplarily showing a handout management screen.
Fig. 28 is a diagram exemplarily showing a handout management screen.
Fig. 29 is a diagram exemplarily showing a handout management screen for individual provider participants.
Fig. 30Ais a diagram exemplarily showing a delivery list screen.
Fig. 30B is a diagram exemplarily showing a delivery list screen.
Fig. 30C is a diagram exemplarily showing a delivery list screen.
Fig. 30D is a diagram exemplarily showing a delivery list screen.
Fig. 30E is a diagram exemplarily showing a delivery list screen.
Fig. 30F is a diagram exemplarily showing a delivery list screen.
Fig. 30G is a diagram exemplarily showing a delivery list screen.

### DESCRIPTION OF EMBODIMENTS

Embodiments of the present invention will hereinafter be described with reference to the drawings.

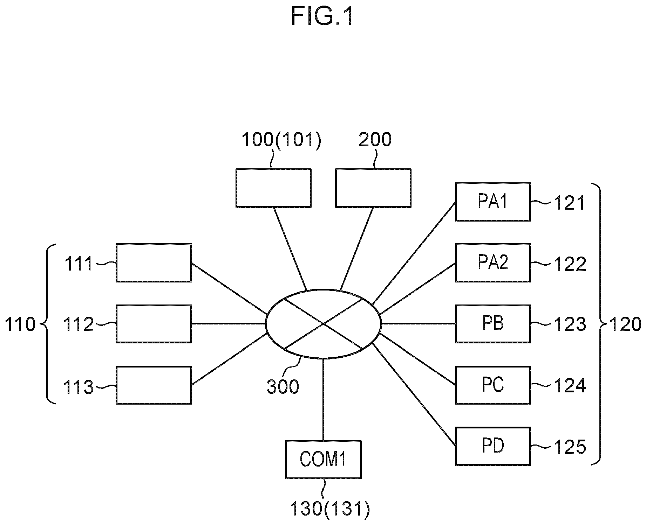

Fig. 1 is a diagram exemplarily showing a configuration of a conference management system according to a first embodiment and a configuration of an exhibition system according to a second embodiment and a third embodiment. Events to which embodiments to be described below are applied include all kinds of events, such as online exhibitions, scientific conferences, ordinary conferences, information exchange gatherings, lectures, and matching events.

Each of the conference management system and the exhibition system includes manager's terminals 101, presenter's terminals 111, 112, and 113, participant's terminals 121, 122, 123, 124, and 125, exhibition institution's terminals 131, a server 200, and a network 300 connecting each terminal to and the server 200 to allow each terminal and the server 200 to transmit/receive data to/from each other.

The manager's terminals 101 will hereinafter be collectively referred to as a manager's terminal 100. The presenter's terminals 111, 112, and 113 will hereinafter be collectively referred to as a presenter's terminal 110. The participant's terminals 121, 122, 123, 124, and 125 will hereinafter be collectively referred to as a participant's terminal 120. The exhibition institution's terminals 131 will hereinafter be collectively referred to as an exhibition institution's terminal 130.

Exhibition institutions include public institutions, universities, etc., other than companies. In the embodiments, however, the exhibition institutions will be described as exhibition companies. The embodiments relate to an assumed case where when a scientific-society-hosted academic lecture is held, a plurality of companies exhibit booths as support companies. In a conference (symposium, etc.) held, a person who makes a presentation is referred to as a presenter. In a scientific-society-hosted academic lecture held, a person who manages the proceeding of the lecture is referred to as a manager. A participant is a person who participates in the scientific-society-hosted academic lecture, and an exhibition institution is a participant, too.

The manager's terminal 100, the presenter's terminal 110, the participant's terminal 120, and the exhibition institution's terminal 130 are information processing devices, which are provided as, for example, personal computers. The network 300 is provided as the Internet, an intranet, or the like. The server 200 is provided as a physical server or a virtual server or the like built on a cloud computing service system.

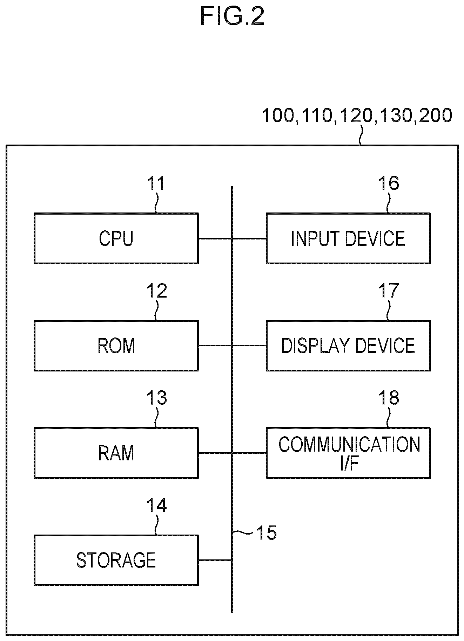

Fig. 2 is a block diagram exemplarily showing a hardware configuration of the manager's terminal 100, of the presenter's terminal 110, of the participant's terminal 120, of the exhibition institution's terminal 130, and of the server 200 according to each embodiment.

As shown in Fig. 2, in the manager's terminal 100, the presenter's terminal 110, the participant's terminal 120, the exhibition institution's terminal 130, and the server 200, a central processing unit (CPU) 11, a read-only memory (ROM) 12, a random access memory (RAM) 13, a storage 14, an input device 16, a display device 17, and a communication I/F 18 are interconnected via a system bus 15 so that they can communicate with each other.

The CPU 11, which is a central processing unit, executes various programs and controls each device connected to the system bus 15. In other words, the CPU 11 reads a program from the ROM 12 or the storage 14 and executes the program, using the RAM 13 as a work area. According to a program stored in the ROM 12 or the storage 14, the CPU 11 controls each device connected to the system bus 15 and executes various computations. The ROM 12 or the storage 14 holds a basic input/output system (BIOS) or an operating system (OS), which is a control program executed by the CPU 11, a computer-readable/executable program for implementing the present invention, and various data needed.

The ROM 12 stores various control programs and various data. The RAM 13 functions as a main memory, a work area, or the like of the CPU 11, and, as the work area, temporarily stores a program or data. The storage 14 is provided as a hard disk drive (HDD) or a solid state drive (SSD), and stores various programs including the BIOS and OS and various data.

The input device 16 includes a pointing device, such as a mouse, and a keyboard, and is used to make various inputs.

The display device 17 is, for example, a liquid crystal display, and displays various types of information. The display device 17 may be provided as a touch panel, in which case the display device 17 functions also as the input device 16.

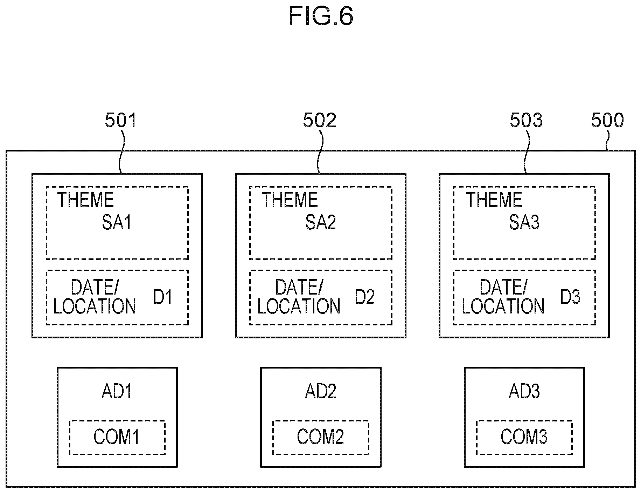

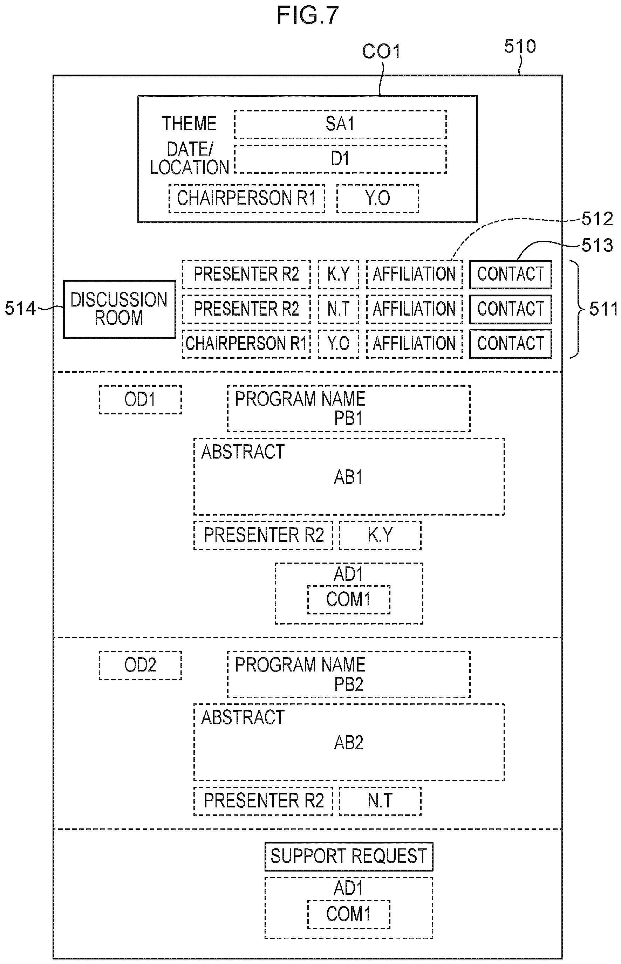

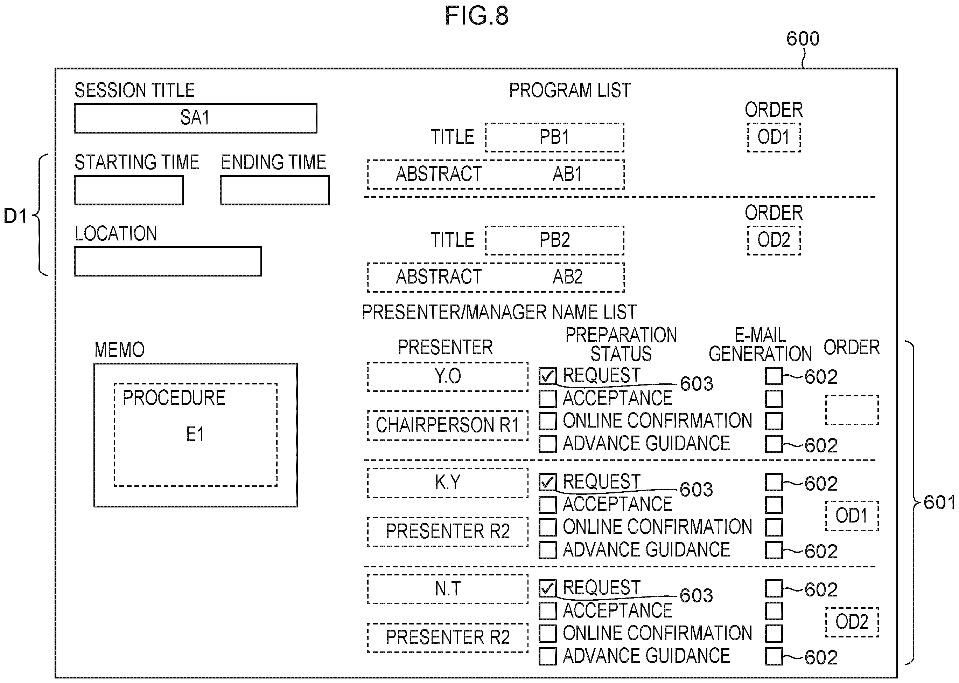

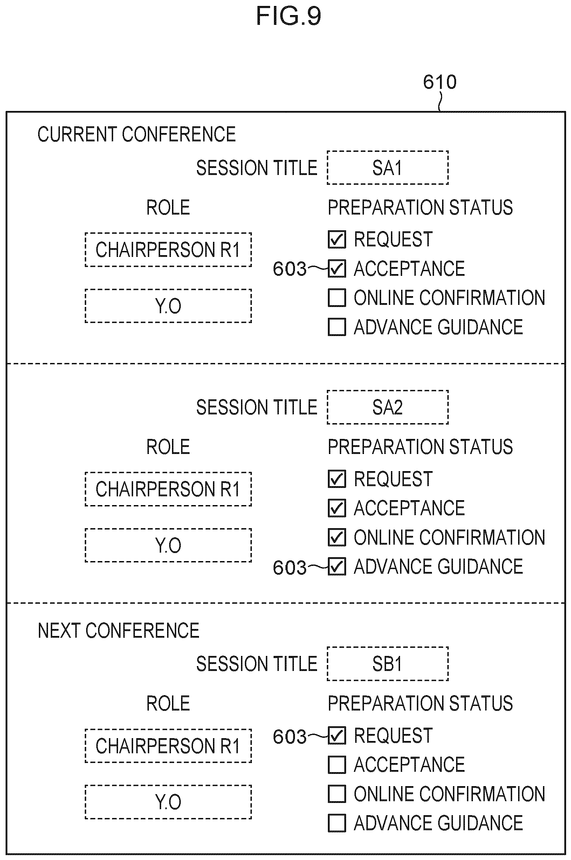

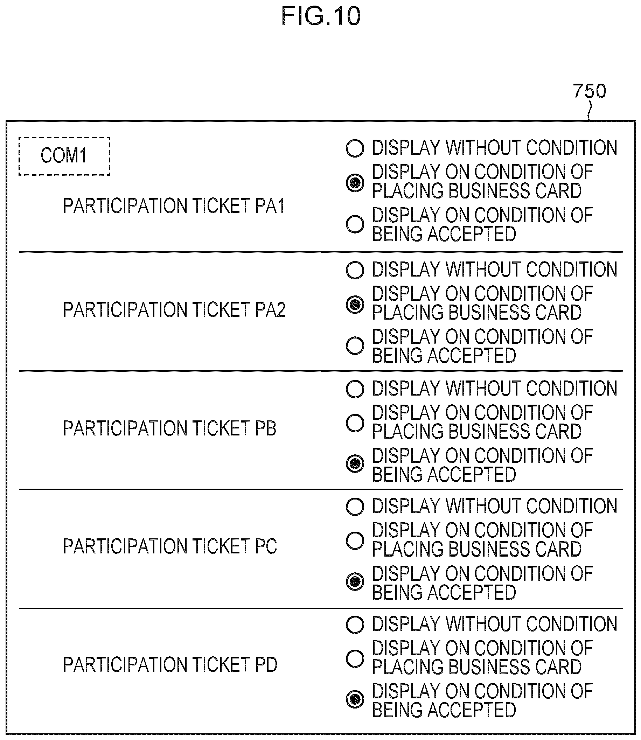

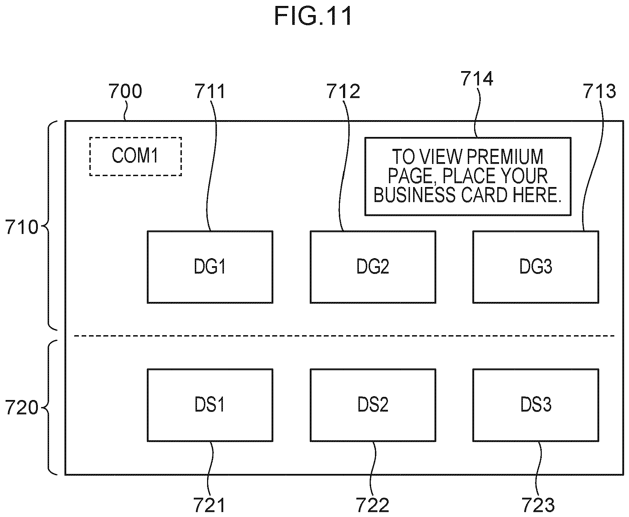

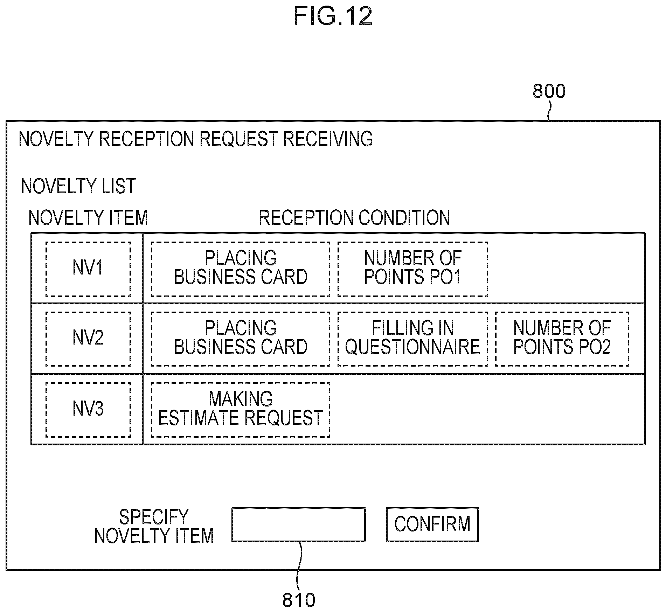

On a display screen of the display device 17, conference holding screens 500 and 510 (Figs. 6 and 7), a conference preparation screen 600 (Fig. 8), a conference preparation screen for presenter 610 (Fig. 9), a company-side management screen 750 (Fig. 10), a company information screen 700 (Fig. 11), and a novelty reception request receiving screen 800 (Fig. 12), which will be described later, are displayed.

The communication interface 18 is an interface for communicating with other devices, and is operated using such protocol as Ethernet (registered trademark), FDDI, and Wi-Fi (registered trademark). The communication interface 18 is connected to the network 300 and controls data transmission/reception.

By accessing the server 200, the presenter's terminal 110 and the participant's terminal 120 are able to specify a specific conference on the conference holding screen 500 and hold the specified conference. For example, the presenter's terminal 110 and the participant's terminal 120 each have a web camera (not illustrated) connected thereto for transmitting a moving image of the terminal and a microphone (not illustrated) connected thereto for transmitting a voice, and have also a speaker (not illustrated) connected thereto for listening to the voice of the other party. In a conference, a screen is shared between participants in such a way that the display screen of the display device 17 of the presenter's terminal 110, which is a host, is displayed on the display screen of the display device 17 of the participant's terminal 120, which is a guest. The screen to be shared can be specified by the presenter's terminal 110 serving as the host. The screen to be shared may be a screen showing an application or the entire display screen of the display device 17.

An online academic lecture is implemented by installing an online conference program in the presenter's terminal 110 serving as the host and in the participant's terminal 120 serving as the guest and executing the online conference program.

An online business card exchange program, which will be described below, may be additionally installed in the presenter's terminal 110 serving as the host and in the participant's terminal 120 serving as the guest and the academic lecture may be implemented online with the online business card exchange program installed. The online conference program may have the function of the online business card exchange program, which will be described below.

### (Online Business Card Exchange Program)

### (Conventional Problem)

One thing a face-to-face academic lecture has but an online academic lecture does not have is a business card exchange time.

In the case of the face-to-face academic lecture, the business card exchange time starts after the end of the lecture to allow the presenter and participants to exchange their business cards. Participants exchange their business cards out of various intentions. A person who simply wants to get a business card of the presenter, a person who wants to have a conversation with the presenter as a good business performance to report, a person who wants to ask a question about the lecture details, a person who wants to show his or her idea and see how the presenter responses to it, a person who wants to have the presenter's permission to meeting the presenter in another occasion, and so on: different participants have different intentions. The business card exchange time is different in nature from a question time set in the midst or at the end of the lecture. The more popular the presenter is, the longer the queue for business card exchange becomes. A participant who keeps chattering in the business card exchange time is actually an annoyance to the presenter but there is no way for the presenter to just stop the conversation. Such a case is annoying to other participants waiting in a queue.

Now, when the online academic lecture has no business card exchange time, the lecture may become less attractive than the face-to-face academic lecture. Even in a chat break during the online lecture, it is difficult for the presenter and participants to have a free conversation as they would have in the business card exchange time.

### (Solution)

A solution to deal with this problem is as follows. The online business card exchange program is added to the online conference program to make the online conference more similar to the face-to-face conference, and an additional function is given to the online conference as well to make it more convenient than the face-to-face conference.

### (Example of Online Business Card Exchange Program)

The online business card exchange program is executed as follows. The online business card exchange program is executed on the assumption that the online conference program is already executed.
1) A business card exchange request button is displayed on an online conference screen sharing page of the display device 17 of the participant's terminal 120.
2) When the business card exchange request button is pressed on the screen of the display device 17 of the participant's terminal 120, the participant is prompted to input his or her affiliation and name.
3) On the screen of the display device 17 of the presenter's terminal 110, the affiliation and name of the participant, who has pressed the business card exchange request button and inputted his or her affiliation and name, are displayed. This allows the presenter to know in real time the affiliation and name of a participant who wants business card exchange.
4) On the screen of the display device 17 of the presenter's terminal 110, a priority button and a normal button are displayed in association with participants who wants business card exchange. The priority button and the normal button are buttons for determining whether or not to give priority to business card exchange with a certain participant. The presenter presses the priority button or the normal button for each participant who wants business card exchange, thus being able to divide the participants into a group of participants with whom the presenter wants to exchange his or her business card in priority (who are referred to as priority participants) and the other group of participants (who are referred to as normal participants).
   In addition, the presenter is able to determine which explanation of what page of a screen shared with the participants increases the number of participants who want business card exchange. The presenter is thus able to know a screen-shared page with a strong appeal to customers or explanation content with a strong appeal to customers and use the known fact as a reference material for the next lecture.
5) After the lecture by the presenter is over, the total number of participants who want business card exchange and the number of priority participants are displayed on the screen of the display device 17 of the presenter's terminal 110. A business card exchange time start button is also displayed on the screen of the display device 17 of the presenter's terminal 110.
6) When the presenter presses the business card exchange time start button on the screen of the display device 17 of the presenter's terminal 110, the presenter's terminal 110 is connected to the participant's terminals 120 of participants who want business card exchange to allow the presenter and participants to talk face-to-face via web cameras, microphones, and the speakers. For example, they can talk to each other online, using a full-screen view. Connection order is set such that when a priority participant and a normal participant are both present, the priority participant is connected in priority over the normal participant. In a case where a plurality of priority participants are present, a participant who has requested business card exchange earlier is given priority.
7) In the online face-to-face conversation, a conversation non-disclosure button is displayed on the screen of the display device 17 of the presenter's terminal 110. When the presenter presses the conversation non-disclosure button on the screen of the display device 17 of the presenter's terminal 110, the terminal operates in such a way as to prevent other participants from hearing the presenter's conversation with the counterpart participant.
8) In the online face-to-face conversation, a business card exchange set time selection button is displayed on the screen of the display device 17 of the presenter's terminal 110. When the presenter presses the business card exchange set time selection button on the screen of the display device 17 of the presenter's terminal 110, it limits a conversation time per participant to a selected business card exchange set time. For example, a business card exchange set time of "3 minutes" may be selected. When a time elapsed from the start of the online face-to-face conversation reaches the selected business card exchange set time, for example, an end message "Your time is up. Another participant who wishes to exchange a business card is waiting. Please end your conversation." appears on the screen of the display device 17 of the presenter's terminal 110. In another case, the end message may be outputted from the speaker. This message facilitates switching to the next participant who wants business card exchange.
9) In the online face-to-face conversation, a conversation end button is displayed on the screen of the display device 17 of the presenter's terminal 110. When the presenter presses the conversation end button on the screen of the display device 17 of the presenter's terminal 110, the end message is displayed or announced even when the online face-to-face conversation is still going on.
10) In the online face-to-face conversation, business cards are exchanged online. A business card exchange button is displayed on the screen of the display device 17 of the presenter's terminal 110. Similarly, a business card exchange button is displayed on the screen of the display device 17 of the participant's terminal 120 of the participant engaging in the online face-to-face conversation. When the presenter presses the business card exchange button on the screen of the display device 17 of the presenter's terminal 110, it allows the participant's terminal 120 of the participant engaging in the online face-to-face conversation to download data of a real business card of the presenter. Similarly, when the participant engaging in the online face-to-face conversation presses the business card exchange button on the screen of the display device 17 of the participant's terminal 120, it allows the presenter's terminal 120 to download data of a real business card of the participant engaging in the online face-to-face conversation.

When the participant or the presenter has a plurality of types of business cards, a business card of a type suitable for the other party can be selected from among the plurality of types of business cards.

In the online face-to-face conversation, a third party may be introduced. For example, an e-mail address of the third party may be presented on the screen of the display device 17. A person not having made user registration with the present online academic conference holding system is thus able to exchange business cards online with the presenter and participants through e-mailing.

The following case is also possible: during the online face-to-face conversation, a confidentiality agreement is automatically generated, based on user information on the parties to the online face-to-face conversation, information on the title of the lecture, and information on the date of the lecture, and the parties to the online face-to-face conversation seal the confidentiality agreement with an electronic seal to put the agreement effective.

11) When the business card exchange time start button is pressed on the screen of the display device 17 of the presenter's terminal 110, a message "There are ∘ participants who wish to exchange business cards. Your turn is the ∘-th." is displayed on the screen of the display device 17 of the participant's terminal 120 of each participant who has requested business card exchange. This allows the participant who has requested business card exchange to know a rough estimate of a time the participant needs to wait before the participant's turn to join the online face-to-face conversation.

As described above, by applying the online business card exchange program to the online academic conference holding system, business card exchange as real as business card exchange in a face-to-face academic conference can be made and business card exchange itself is made more efficiently as well. This gives both presenter and participants improved convenience.

### (First Embodiment)

The conference management system according to the first embodiment will hereinafter be described.

In the first embodiment, an example in which the system is applied to an online academic conferences will be described.

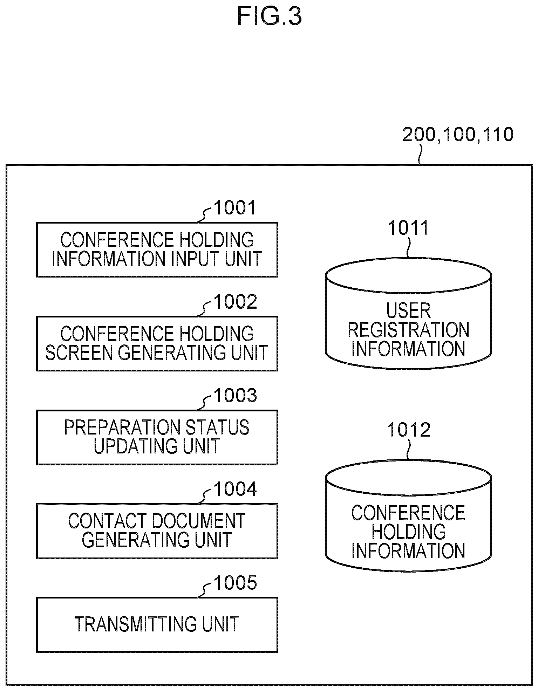

Fig. 3 is a block diagram exemplarily showing a functional configuration of the conference management system according to the first embodiment. The functional configuration shown in Fig. 3 is the functional configuration that the server 200, the manager's terminal 100, and the presenter's terminal 110 each have.

The conference management system includes a conference holding information input unit 1001, a conference holding screen generating unit 1002, a preparation status updating unit 1003, a contact document generating unit 1004, and a transmitting unit 1005. The conference management system further includes a database 1011 storing user registration information on each user, such as a manager, a presenter, a participant, and an exhibition company, and a database 1012 storing conference holding information.

### (Conference Preparation Screen)

In a scientific-society-hosted academic lecture, the manager sets a program for each theme (session) in preparation for holding the conference (lecture). The manager creates conference holding information including a session chairperson, a presenter of each program, a session name, the date and location of the conference, the title of each program, and an abstract. A chairperson and a presenter are collectively referred to as a presenter. The manager communicates with each presenter (chairperson, presenter) by e-mail while checking the progress of a task each presenter is in charge of.

There may be a person who is scheduled to be appointed as a presenter but is not registered with the system as a user. In such a case, the manager can make user registration on behalf of the person who is scheduled to be appointed as the presenter, based on information on the person, such as an e-mail address. Similarly, there may be a person who is preferable as a participant but is not registered with the system as a user. In such a case, the manager can make user registration on behalf of the person, based on information on the person, such as an e-mail address.

The manager has ab authority to access the conference holding information input unit 1001.

When user information (ID and password) identifying a conference manager is inputted on the manager's terminal 101, a conference preparation screen 600 shown in Fig. 8 is displayed on the display device 17.

The conference preparation screen 600 is a display screen for preparing, for example, a conference (e.g., a symposium) called session SA1.

On the conference preparation screen 600, the manager inputs conference holding information CO1 on the session SA1.

The conference holding information CO1 on the session SA1 is, for example, information including the following pieces of information.
- Information indicating that the session named SA1 includes programs titled PB1 and PB2
- Information indicating that respective presentation orders of the programs PB1 and PB2 are the first "OD1" and the second "OD2"
- Information indicating that a role of the chairperson "R1" of the session SA1 is assumed by a person called "YO" and a role of respective presenters "R2" of the programs PB 1 and PB2 are assumed by persons called "K.Y and N.T"
- Information indicating that respective abstracts of the programs PB1 and PB2 are "AB1 and AB2"
- Information indicating that the date, start time, end time, and location of the session SA1 are "D1"

### (Conference Holding Screen)

The conference holding screen generating unit 1002 generates a conference holding screen 500 shown in Fig. 6, based on the conference holding information CO1 inputted to the conference holding information input unit 1001.

The conference holding screen 500 includes, for example, display sections 501, 502, and 503 associated respectively with sessions SA1, SA2, and SA3.

In the display section 501, for example, the session name (theme) "SA1" and the date and location "D1" of holding the session SA1 are displayed. This display pattern applies also to the other display sections 502 and 503. In the display section 502, the session name (theme) "SA2" and the date and location "D2" of holding the session SA2 are displayed. In the display section 503, the session name (theme) "SA3" and the date and location "D3" of holding the session SA3 are displayed.

Now, a support company posts a company advertisement on the conference holding screen 500. The company advertisement may be displayed such that the larger the sponsorship money offered by the company, the higher the frequency of display of the company advertisement of the company on the conference holding screen 500 becomes.

Fig. 6 shows a case where, on the conference holding screen 500, a support company COM1 posts a company advertisement AD1, a support company COM2 posts a company advertisementAD2, and a support company COM3 posts a company advertisementAD3. For example, when, on the conference holding screen 500, a display part where the company advertisement AD1 is displayed is clicked, the conference holding screen 500 switchers to a company information screen 700 (see Fig. 11) indicating company information on the support company COM1, the company information screen 700 being hyperlinked to the display part. The company information screen 700 will be described in the second embodiment, which will be described later.

When the manager solicits each company for a sponsorship contribution, the manager transmits a sponsorship statement to each company and each company transmits a consent to the manager. This transaction may be carried out on the present academic conference holding system (Fig. 1) by, for example, transmitting/receiving data to/from each other through a communication network, such as the Internet.

By pressing a joining/viewing button (not illustrated) placed close to the display section 501 on the conference holding screen 500, a person is able to join the session SA1 corresponding to the j oining/viewing button and view the session.

Now there is a lecture for approval of credits. A person who attends at this lecture earns a credit according to the Board of Certification of Fellow System. In this case, for example, a restrictive condition that only the participant having an attribute of being a doctor PA1 belonging to the medical society is allowed to attend the lecture for approval of credits can be set.

Such a conference may be distributed in real time or may be distributed in the form of video recorded in the past. A replay speed at the time of viewing such video may be changed to double a given replay speed. However, replay at the double speed may be prevented on a presenter-by-presenter basis. For example, when a lecture given by a fast-talking presenter is viewed, the replay speed is limited to 1.2 times or lower the given replay speed.

When a lecture is distributed in the form of streaming data, it may be distributed not only in the form of video data but also in the form of audio data. This allows a person to listen to the lecture on a portable player while performing other work.

When, on the conference holding screen 500, a display part where the display section 501 is displayed is clicked, the conference holding information CO1 on the session SA1, the conference holding information CO1 being hyperlinked to the display part, appears on the conference holding screen 510, as shown in Fig. 7.

The conference holding screen 510 shown in Fig. 7 is configured as follows.

On an upper part of the conference holding information screen 510, an "outline of the session SA1" is displayed, which indicates the session name (theme) "SA1", the date and location "D1" of holding the session SA1, and the role of the chairperson "R1" of the session SA1 being assumed by the person "YO".

Under the "outline of the session SA1", a presenter collective display section 511 is placed. The presenter collective display section 511 displays information indicating that the role of the chairperson "R1" of the session SA1 is assumed by the person "YO" and that the role of respective presenters "R2" of the programs PB1 and PB2 are assumed by the persons "K.Y and N.T".

In the presenter collective display section 511, information 512 on affiliation and information exchange request contact buttons 513 are provided in one-to-one correspondence to the chairperson and presenters. When a participant presses the information exchange request contact button 513, the participant is able to contact the corresponding presenter by e-mail or the like.

The presenter collective display section 511 includes a discussion room entry button 514 for entering a bulletin board where a discussion about the session SA1 is made. A condition for joining a discussion on the bulletin board can be determined according to the attribute of a participant (the doctor PA1 belonging to the medical society, an invited presenter PA2, a non-member doctor PB, an auditor PC, or an exhibition company PD). In the present specification, the attribute of the participant means the category of the participant in an online event, such as an online academic conference or an online exhibition.

Under the presenter collective display section 511, a program PB1 information display section is placed.

The program PB1 information display section displays information indicating that the presentation order of the program PB1 is the first "OD1", the title is "PB1", the abstract is "AB1", and the role of the presenter "R2" of the program PB1 is assumed by the person "K.Y".

A program PB2 information display section is placed under the program PB1 information display section.

The program PB2 information display section displays information indicating that the presentation order of the program PB2 is the second "OD2", the title is "PB2", the abstract is "AB2", and the role of the presenter "R2" of the program PB2 is assumed by the person "N.T".

Under the second program PB2 information display section, a support requesting button for requesting the manager to provide support related to the session SA1 is placed. The support requesting button may be placed in the presenter collective display section 511. For example, the support requesting button may be placed near the discussion room entry button 514.

It should be noted that a measure to permit a person other than the manager to access information on the title, abstract, etc., on the conference holding screen 510 may be taken so that a presenter or the like, who is the author of a program, can make a correction. This applies also to data correction on the company information screen.

Company advertisements can be arranged not only in units shown on the conference holding screen 500 but also in units of session-by-session association and program-by-program association on the conference holding screen 510.

As shown in Fig. 7, for example, in a case where the company COM1 manufactures and sells a product related to the theme of the session SA1, the company advertisement AD1 of the company COM1 is placed at, for example, the lowest position in the conference holding screen 510 of the session SA1, according to a request of the company COM1. In addition, in a case where the company COM1 manufactures and sells a product related to the program PB1 in the session SA1, the company advertisement AD1 of the company COM1 is placed in the program PB1 information display section in the conference holding screen 510 of the session SA1, according to a request of the company COM1.

When a specific operation, such as clicking a display part where the company advertisement AD1 is displayed in session-by-session association or program-by-program association, is executed, the display screen switches to the company information screen 700 (see Fig. 11) of the support company COM1.

### (Preparation Status Updating and Contact Document Creation)

Fig. 8 is referred to again. To hold the session SA1 (conference), preparation of creating the conference holding information CO1 on the session SA1 and preparation of contacting participants in the session SA1 by e-mail are necessary.

A manager of the session SA1 contacts each presenter (chairperson, presenter) of the session SA1 and a different manager of the session SA1 by e-mail while checking the progress of a task each presenter is in charge of.

While proceeding with preparation work of creating the conference holding information CO1 on the session SA1, the manager of the session SA1 carries out preparation work of contacting each presenter and manager of the session SA1 by e-mail.

The manager of the session SA1 has an authority to access the preparation status updating unit 1003.

A presenter/manager list display section 601 for the session SA1 is provided on the conference preparation screen 600. The presenter/manager list display section 601 displays roles and preparation statuses that are associated respectively with presenters and managers. Items displayed in the presenter/managers list display section 601 are listed in a random order of user registration. These items, however, can be sorted into a preset order and be displayed in such an order. For example, a user whose role is a chairperson is displayed at the top, a user whose role is a presenter is displayed under the chairperson, and a user whose role is a manager is displayed under the presenter. This display order can be set in advance. In a case where a plurality of presenters are present, a display order in which the presenters are displayed in the order of their presentations can be set in advance. According to such a preset order, information on the presenters is displayed on the conference holding screens 500 and 510.

The preparation statuses include, for example, a "request" status, an "acceptance" status, an "online conference setting confirmation" status, and an "advance guidance" status.

A check box 603 is associated with each of the preparation statuses. The check boxes 603 make up the preparation status updating unit 1003.

Each check box 603 is automatically or manually filled with a check in accordance with the current preparation status, which updates the preparation status of the presenter and the manager.

A contact document generating button 602 is associated with each of the preparation statuses.

The contact document generating button 602 is a button for giving an instruction to generate a contact document. When the contact document generating button 602 is pressed, the contact document generating unit 1004 generates a contact document to be transmitted to the presenter or manager corresponding to the pressed contact document generating button 602. Hereinafter, a case where a contact document to be transmitted to a presenter is generated will be described.

E-mail text sent to each presenter varies in content, depending on the role and the current status of the presenter. For example, an e-mail text sent to a presenter needs to be changed in content for each of the programs PB1 and PB2 the presenter is in charge of.

The conference preparation screen 600 includes a text input box where a text of a procedure E1 of the session SA1 is inputted. It is preferable that the procedure E1 is put in an e-mail text to be sent to a chairperson.

Hereinafter, a case where contact documents to be sent to the chairperson YO of the session SA1, the presenter K.Y of the program PB1, and the presenter N.T of the program B2 are generated will be described exemplarily.

To generate a contact document for asking the user YO to assume the chairperson of the session A1, the contact document generating button 602 associated with the preparation status "request" of the user YO is pressed. In response to this action, the contact document generating unit 1004 generates a contact document carrying a text "Mr. YO, please be noted that the scheduled date, starting time, ending time, and location of the session SA1 are D1. We ask you to assume the chairperson of the session SA1. Please accept this assignment".

To generate a contact document for asking the user K.Y to assume the presenter of the program PB1, the contact document generating button 602 associated with the preparation status "request" of the user K.Y is pressed. In response to this action, the contact document generating unit 1004 generates a contact document carrying a text "Mr. K.Y, please be noted that the scheduled date, starting time, ending time, and location of the session SA1 are D1. The scheduled presentation order of the program PB1 is OD1. We ask you to assume the presenter of the program PB1. Please accept this assignment. If you accept it, send us an abstract of the program PB1.".

To generate a contact document for asking the user N.T to assume the presenter of the program PB2, the contact document generating button 602 associated with the preparation status "request" of the user N.T is pressed. In response to this action, the contact document generating unit 1004 generates a contact document carrying a text "Mr. N.T, please be noted that the scheduled date, start time, end time, and location of the session SA1 are D1. The scheduled presentation order of the program PB2 is OD2. We ask you to assume the presenter of the program PB2. Please accept this assignment. If you accept it, send us an abstract of the program PB2.".

For a translator and a different conference manager, a similar contact document corresponding to the role and preparation status "request" of each of the translator and conference manager is generated.

Another configuration in which the contact document generating unit 1004 is instructed to collectively generate "request" contact documents for all participants in the session SA1 is also possible.

The transmitting unit 1005 transmits the contact document generated by the contact document generating unit 1004, to the corresponding presenter. Contact document transmission may be executed in the form of the manager's confirming the text of the contact document and giving a transmission instruction or may be executed automatically without the manager's transmission instruction.

Another configuration in which the transmitting unit 1005 is instructed to collectively send all "request" contact documents generated is also possible.

When a contact document has been transmitted, a preparation status is updated. For example, when a "request" contact document has been transmitted to the user YO, the preparation status associated with the user YO is updated to the preparation status "request". For example, the check box 603 of "request" is automatically checked, which updates the current preparation status to the preparation status "request". In the same manner, the preparation statuses associated with the user K.Y and N.T are each updated to the preparation status "request".

The presenter and manager who have received the contact documents each have an authority to update the preparation status.

When the user YO inputs user information (ID and password), which identifies the user YO, on the presenter's terminal 111, it displays the conference preparation screen for presenter 610, which is shown in Fig. 9, on the display device 17.

The preparation statuses are displayed on the conference preparation screen for presenter 610 in the same manner as on the conference preparation screen 600.

The preparation statuses on the conference preparation screen for presenter 610 are in synchronization with the preparation statuses on the conference preparation screen 600. When a preparation status on one screen is updated, therefore, the corresponding preparation status on the other screen is updated.

The presenter and manager who have received the contact documents update their preparation statuses according to the content of the contact documents. For example, when the user YO receives a contact document carrying a "request" for the user YO's assuming the chairperson of the session SA1, the user YO confirms the content of the contact document and then, when intending to accept the "request", checks the check box 603 of "acceptance" of the preparation statuses on the conference preparation screen for presenter 610. As a result, the preparation status of the chairperson YO of the session SA1 on the conference preparation screen for presenter 610 is updated to "acceptance".

When the preparation status of the chairperson YO of the session SA1 on the conference preparation screen for presenter 610 is updated to "acceptance", the preparation status of the chairperson YO of the session SA1 on the conference preparation screen 600 is updated to "acceptance" as well in a synchronized manner.

Creation and updating of a preparation status is carried out for each session. A session created on the conference preparation screen 600 is created on the conference preparation screen for presenter 610 as well in a synchronized manner.

There may be an assumed case where, for example, the chairperson YO of the session SA1 serves also as the chairperson of the different session SA2. The chairperson YO of the session SA1 is able to see the preparation statuses of the session SA1 and the preparation statuses of the different session SA2 on the conference preparation screen for presenter 610. As shown in Fig. 9, the chairperson YO may be allowed to see the preparation statuses of a session SB1, a different conference, as well.

The above description applies also to a case where the presenter K.Y of the program PB1 in the session SA1 receives a "request" contact document and "accepts" the request. When the preparation status of the user K. Y is updated to "acceptance" on the conference preparation screen for presenter on the display device 17 of the presenter's terminal 112 of the user K. Y, the preparation status of the presenter K.Y of the program PB1 in the session SA1 is updated to "acceptance" as well on the conference preparation screen 600 in a synchronized manner.

Another configuration is also possible, in which when a given period has passed after transmission of a "request" contact document but the corresponding preparation status is not updated, a reminder contact document is sent automatically. For example, when a given period has passed after transmission of a "request" contact document to the presenter N.T of the program SB2 in the session SA1 but the corresponding preparation status is not updated, the transmitting unit 1005 sends a reminder contact document automatically to the user N.T. When the preparation status is updated to "acceptance" on the conference preparation screen for presenter on the display device 17 of the presenter's terminal 113 of the user N.T, the preparation status of the presenter N.T of the program PB2 in the session SA1 is updated to "acceptance" as well on the conference preparation screen 600 in a synchronized manner.

When the conference holding information CO1 on the session SA1 is generated on the conference preparation screen 600, an "advance guidance" contact document for the session A1 is generated. The conference holding information CO1 is stored in the database 1012 for storing conference holding information.

When an "advance guidance" contact document to be sent to the chairperson YO of the session SA1 is needs to be generated, the contact document generating button 602 associated with the preparation status "advance guidance" of the chairperson YO is pressed. In response to this action, the contact document generating unit 1004 generates a contact document carrying a statement "Mr. YO, here is conference holding information CO1 on the session SA1. Please confirm it. We would like you to follow the procedure E1 in proceeding with the session SA1.".

When an "advance guidance" contact document to be sent to the presenter K.Y of the program PB1 in the session SA1 is needs to be generated, the contact document generating button 602 associated with the preparation status "advance guidance" of the presenter K.Y of the program PB1 is pressed. In response to this action, the contact document generating unit 1004 generates a contact document carrying a statement "Mr. K.Y, here is conference holding information CO1 on the session SA1. For precaution's sake, please confirm the abstract AB1 of the program PB1. The presentation order of the program PB1 is OD1. We are looking forward to see your good presentation at the session.".

When an "advance guidance" contact document to be sent to the presenter N.T of the program PB2 in the session SA1 is needs to be generated, the contact document generating button 602 associated with the preparation status "advance guidance" of the presenter N.T of the program PB2 is pressed. In response to this action, the contact document generating unit 1004 generates a contact document carrying a statement "Mr. N.T, here is conference holding information CO1 on the session SA1. For precaution's sake, please confirm the abstract AB2 of the program PB2. The presentation order of the program PB2 is OD2. We are looking forward to see your good presentation at the session.".

For a translator and a different conference manager, a similar contact document corresponding to the role and preparation status "advance guidance" of each of the translator and conference manager is generated.

Another configuration in which the contact document generating unit 1004 is instructed to collectively generate "advance guidance" contact documents for all participants in the session SA1 is also possible.

The transmitting unit 1005 transmits the contact document generated by the contact document generating unit 1004, to the corresponding presenter.

Another configuration in which the transmitting unit 1005 is instructed to collectively send all "advance guidance" contact documents generated is also possible.

When a contact document has been transmitted, a preparation status corresponding to the contact document transmitted is updated. For example, when an "advance guidance" contact document that is to be transmitted to the chairperson YO of the session SA1 is transmitted, the preparation status associated with the chairperson YO of the session SA1 is updated to the preparation status "advance guidance". For example, the check box 603 of "advance guidance" associated with the chairperson YO of the session SA1 is automatically checked. In the same manner, the preparation statuses associated with the presenters K.Y of the program PB1 of the session SA1 and presenters N.T of the program PB1 of the session SA1 are each updated to the preparation status "advance guidance".

Information necessary for holding an academic conference, such as preparation statuses, can be managed in association with each presenter and manager. Such information includes, for example, a detailed role of a presenter (assistant chairperson, etc.), a detailed role of a manager (manager, faculty, etc.), whether a presenter is a speaker, whether an abstract necessary for a lecture has been submitted, whether, at a lecture, video is presented first or slides are presented first, and an honorific title in the address of a contact document (Mr., Mrs., etc.). A contact document can be generated based on these pieces of information. For example, when an abstract necessary for a lecture has not been submitted, a communication document requesting the presenter of the lecture to submit the abstract can be generated.

A detailed preparation status, such as "whether an abstract necessary for a lecture has been submitted", may be displayed on the conference preparation screen in association with the presenter and the manager.

Further, in addition to displaying the preparation statuses of the presenter and manager on the conference preparation screen for the session SA1, the preparation statuses of the presenters and managers of all sessions of a conference or the preparation statuses of the presenters and managers of a plurality of conferences may be collectively displayed on the conference preparation screen.

Information generated for conference preparation may be presented to the presenter when the online conference is held. For example, the procedure E1 of the session SA1 is displayed on the screen of the display device 17 of the presenter's terminal 110 of the chairperson or presenter who are presiding at the session or giving a lecture. This allows smooth progress of the lecture.

As described above, according to the first embodiment, based on the conference holding information CO 1 and the preparation status of a presenter on the conference preparation screen 600, the contact document corresponding to the role and the preparation status of the presenter is automatically generated. Hence preparation work of generating the conference holding information CO1 and preparation work of contacting each presenter by e-mail can be carried out systematically by a single system. Compared with a case where the system of the first embodiment is not adopted, therefore, the efficiency of conference holding preparation work is improved significantly.

According to the first embodiment, in particular, the preparation status is automatically updated on the conference preparation screen 600 in response to updating of the preparation status on the conference preparation screen for presenter 610 on the receiver side. This makes it unnecessary for a presenter on the receiver side to send a reply contact document back to the sender side and unnecessary for the sender side to confirm the reply contact document. As a result, labors of both presenter side and manager side are reduced significantly.

Another configuration in which a reply contact document is sent from the presenter on the receiver side back to the manager on the sender side is also possible. Another configuration in which all preparation statuses are manually updated is also possible.

### (Second Embodiment)

The exhibition system according to the second embodiment will hereinafter be described.

In the second embodiment, an example in which the system is applied to an online academic conference to be held will be described.

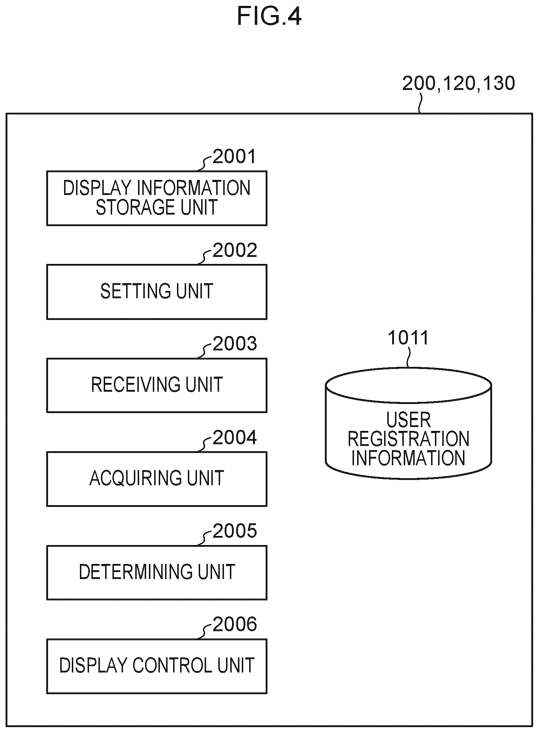

Fig. 4 is a block diagram exemplarily showing a functional configuration of the exhibition system according to the second embodiment. The server 200, the participant's terminal 120, and the exhibition institution's terminal 130 each have the functional configuration shown in Fig. 4.

The exhibition system includes a display information storage unit 2001, a setting unit 2002, a receiving unit 2003, an acquiring unit 2004, a determining unit 2005, and a display control unit 2006. The exhibition system further includes a database 1011 that stores user registration information on each user, such as a manager, a presenter, a participant, and an exhibition institution (exhibition company).

### (Company Information Screen)

The following description will be made under the assumption that an exhibition institution is the support company COM1 that supports the scientific society through sponsorship. Company information on the support company COM1 supporting the scientific society is stored in the display information storage unit 2001.

The exhibition company COM1 has an authority to access the display information storage unit 2001.

Information provided by the exhibition company COM1 includes general display information DG, which may be disclosed to the public, and specific display information (premium information) DS, which the exhibition company COM1 does not want to disclose to other participants, such as rival companies. The display information storage unit 2001 stores the general display information DS and the specific display information DS.

Fig. 11 exemplarily shows the company information screen 700 displaying company information on the exhibition company COM1.

The company information screen 700 includes a general display information screen 710 that displays the general display information DG, and a specific display information screen 720 that displays the specific display information DS.

Pieces of general display information DG1, DG2, and DG3 are displayed in display parts 711, 712, and 713 of the general display information screen 710, respectively. Pieces of specific display information DS1, DS2, and DS3 are displayed in display parts 721, 722, and 723 of the specific display information screen 720, respectively. The specific display information DS1 is, for example, product information, such as product specifications. The specific display information DS2 is, for example, material request information about a request for product materials. The specific display information DS2 is, for example, estimate request information about an estimate request for product ordering.

A participant has an authority to access the general display information DG (DG1, DG2, DG3) among pieces of company information stored in the display information storage unit 2001.

The participant is able to display the general display information screen 710 of the company information screen 700, on the display device 17 of the participant's terminal 120.

The general display information screen 710 includes a display request receiving button 714. When the display request receiving button 714 is pressed, a request for displaying the specific display information DS (DS1, DS2, DS3) is received.

When the participant satisfies conditions for displaying the specific display information DS (DS1, DS2, DS3), the participant is given an authority to access the specific display information DS (DS1, DS2, DS3) among pieces of company information stored in the display information storage unit 2001.

A product may be displayed in a 3D form, using 3D data, on the company information screen 700. For example, 3D data of the product is sent online to a delivery firm, which delivers the 3D data.

Company information data to be displayed on the company information screen 700 may be stored in the display information storage unit 2001 and the stored company information data may be copied to allow a copy of the company information data on the company information screen 700 of a different exhibition.

### (Setting Display Conditions for Specific Display Information)

The exhibition company COM1 has an authority to access the setting unit 2002.

When user information (ID and password) identifying the exhibition company COM1 is inputted on the exhibition institution's terminal 131, a company-side management screen 750 of the exhibition company COM1 is displayed on the display device 17, as shown in Fig. 10.

On the company-side management screen 750, the exhibition company COM1 is able to set display conditions for displaying the specific display information DS on the participant's terminal 120.

As shown in Fig. 10, display conditions of "display without condition", "display on condition of placing a business card", and "display on condition of being approved" can be set in association with the attributes of participants, such as the doctor PA1 belonging to the medical society, the invited presenter PA2, the non-member doctor PB, the auditor PC, and the exhibition company PD. For example, the display condition of "display on condition of placing business card" is set for the doctor PA1 belonging to the medical society and the invited presenter PA2. The display condition of "display on condition of being approved" is set for the non-member doctor PB, the auditor PC, and the exhibition company PD. It is clearly understood from Fig. 10 that participant attributes indicating participant categories in an online event can be determined according to, for example, the type of participation tickets for the online event (the doctor PA1, the invited presenter PA2, the non-member doctor PB, the auditor PC, the exhibition company PD).

In this embodiment, the exhibition company COM1, as a user, manages company information on the exhibition company COM1, which is one exhibition company. However, in the case of the scientific society, a plurality of companies (organizations) as a plurality of users forming a team and managing company information on the companies (organizations) is preferable in some cases. A configuration in which a plurality of companies (organizations) are made into a team and each user making up the team manages company information on the companies (organizations) is, therefore, also possible.

To avoid a case where an ordinary individual other than medical personnel browses advertisements of medicine or the like, the system may prevent ordinary individuals other than medical personnel from browsing advertisements of medicine or the like on the company-side management screen 750, based on the attribute of participants registered as users.

### (Receiving Display Request)

A participant has an authority to access the receiving unit 2003.

When user information (ID and password) identifying the participant is inputted on the participant's terminal 120, it displays the company information screen 700 associated with the exhibition company COM1 on the display device 17.

As shown in Fig. 11, the general display information DG (DG1, DG2, DG3) on the exhibition company COM1 is displayed on the company information screen 700 of the exhibition company COM1.

The display request receiving button 714 on the company information screen 700 makes up the receiving unit 2003.

When the display request receiving button 714 is pressed, a display request for displaying the specific display information DS is received in association with the user information on the participant. The user information includes information on the attribute of the participant (the doctor PA1 belonging to the medical society, the invited presenter PA2, the non-member doctor PB, the auditor PC, the exhibition company PD).

On the company information screen 700, a specific action, such as placing a business card and filling in a questionnaire, can be made as an operation on the screen.

### (Acquiring Attributes of Participant)

The acquiring unit 2004 acquires the attributes of the participant whose request for displaying the specific display information DS has been received by the receiving unit 2003.

### (Determining Whether Display Condition Is Satisfied)

The determining unit 2005 determines whether a display condition associated with the attributes of the participant acquired by the acquiring unit 2004 is satisfied.

When the participant has attributes of the doctor PA1 belonging to the medical society, the determining unit 2005 determines that the display condition "place a business card" is satisfied.

When the participant has attributes of the invited presenter PA2, the determining unit 2005 determines that the display condition "place a business card" is satisfied.

When the participant has attributes of the non-member doctor PB, the determining unit 2005 determines that the display condition "being approved" is satisfied.

When the participant has attributes of the auditor PC, the determining unit 2005 determines that the display condition "being approved" is satisfied.

When the participant has attributes of the exhibition company PD, the determining unit 2005 determines that the display condition "being approved" is satisfied.

On a company management screen (not illustrated), the exhibition company COM1 can give authentication of "being approval" to the participant whose request for displaying the specific display information DS has been received.

### (Controlling Display of Specific Display Information)

When the determining unit 2005 determines that the display condition is satisfied, the display control unit 2006 displays the specific display information DS on the exhibition company COM1 on the participant's terminal 120 of the participant having made the display request for displaying the specific display information DS.

When the participant having made the display request has the attributes of the doctor PA1 belonging to the medical society, the specific display information DS on the exhibition company COM1 is displayed on the display device 17 of the participant's terminal 121 of the doctor PA1 belonging to the medical society under the condition that the display condition "place a business card" is satisfied.

When the participant having made the display request has the attributes of the invited presenter PA2, the specific display information DS on the exhibition company COM1 is displayed on the display device 17 of the participant's terminal 122 of the invited presenter PA2 under the condition that the display condition "place a business card" is satisfied.

When the participant having made the display request has the attributes of the non-member doctor PB, the specific display information DS on the exhibition company COM1 is displayed on the display device 17 of the participant's terminal 123 of the non-member doctor PB under the condition that the display condition "being approved" is satisfied.

When the participant having made the display request has the attributes of the auditor PC, the specific display information DS on the exhibition company COM1 is displayed on the display device 17 of the participant's terminal 124 of the auditor PC under the condition that the display condition "being approved" is satisfied.

When the participant having made the display request has the attributes of the exhibition company PD, the specific display information DS on the exhibition company COM1 is displayed on the display device 17 of the participant's terminal 125 of the exhibition company PD under the condition that the display condition "being approved" is satisfied.

Another configuration is also possible, in which pieces of specific display information DS1, DS2, and DS3 are prepared and different display conditions are set for the pieces of specific display information DS1, DS2, and DS3, respectively.

For example, each of the specific display information DS2 as the material request information and the specific display information DS3 as the estimate request information is displayed on the display device 17 of the participant's terminal 120 under the condition that both the condition "place a business card on the company information screen of the exhibition company COM1" and the condition "being approved" are satisfied. In this case, the specific display information DS1 as the product information is displayed on the display device 17 of the participant's terminal 120 under the condition that just the display condition "place a business card on the company information screen of the exhibition company COM1" is satisfied.

Another configuration is also possible, in which, for example, when the attributes of the participant is the auditor PC or the exhibition company PD, displaying the specific display information DS2 as the material request information or the specific display information DS3 as the estimate request information is not allowed, regardless of whether the display condition is satisfied or not. In this case, when the attribute of the participant is the doctor PA1, the invited presenter PA2, or the non-member doctor PB belonging to the medical society, the specific display information DS2 as the material request information or the specific display information DS3 as the estimate request information is displayed on the display device 17 of the participant's terminal 121, the participant's terminal 122, or the participant's terminal 123 when the display condition is satisfied.

According to the second embodiment, in an event in which a company exhibits or displays its products online, the specific display information DS is disclosed only to the participant with whom the company wants to provide the specific display information DS. This increases matching opportunities and at the same time, prevents leakage of the specific display information DS to a rival company or the like.

The exhibition system of the second embodiment can be applied not only to corporate exhibition at an online academic conference but also to a wide variety of general exhibitions.

### (Third Embodiment)

The exhibition system according to the third embodiment will hereinafter be described.

In the third embodiment, an example in which the system is applied to implementation of an online exhibition event, such as an online academic conference, will be described.

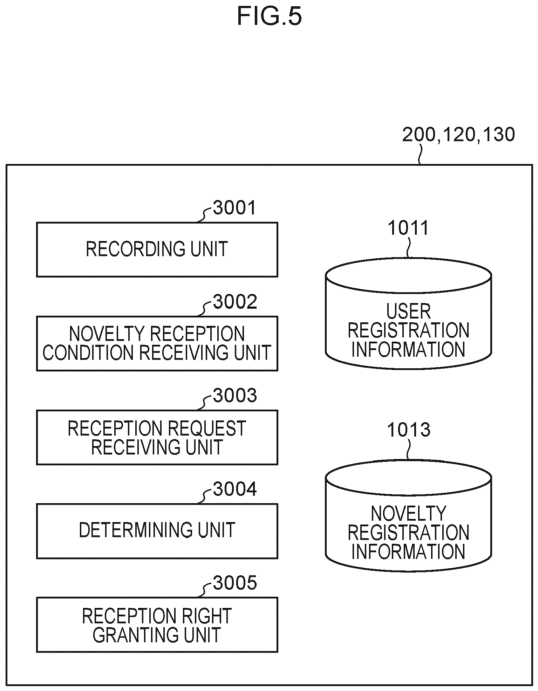

Fig. 5 is a block diagram exemplarily showing a functional configuration of the online exhibition system according to the third embodiment. The server 200, the participant's terminal 120, and the exhibition institution's terminal 130 each have the functional configuration shown in Fig. 5.

The exhibition system includes a recording unit 3001, a novelty reception condition receiving unit 3002, a reception request receiving unit 3003, a determining unit 3004, and a reception right granting unit 3005. The exhibition system further includes a database 1011 that stores user registration information on each user, such as a manager, a presenter, a participant, and an exhibition institution (exhibition company), and a database 1013 that stores novelty registration information.

### (Action Recording by Recording Unit)

On the participant's terminal 120, the participant makes an operation, such as clicking a hyperlink on the display part displaying the company advertisement AD1 on the conference holding screens 500 and 510 shown in Figs. 6 and 7 or on the company information screen 700 shown in Fig. 11, pressing a button, or inputting text to a text box. As a result, the participant is able to participate in the session SA1 and view the programs PB1 and PB2, to browse the company advertisement AD1 of the exhibition company COM1, to acquire the company information (catalog) on the exhibition company COM1, to make a material request to the exhibition company COM1, to make a product estimate request to the exhibition company COM1, to place a business card to be presented to the exhibition company COM1 (put business card information registered by the participant in the company's folder), or to fill in answers to a questionnaire of the exhibition company COM1.

The recording unit 3001 records actions the participant has made to each of exhibition companies (including the exhibition company COM1) at an online exhibition event, the exhibition companies exhibiting products at the event, in association with the participant. The number of acquired points is associated with each action the participant has made, and therefore the recording unit 3001 records the number of acquired points in association with the participant.

Actions the participant has made may be recorded and an analysis may be made, based on the recorded actions, to use analysis results for marketing, scientific society operations, etc. In an assumed case, for example, the number of clicks on individual items, such as a session, a program, an abstract, a company advertisement, and a novelty, that were made in past 60 minutes may be displayed as a list of the numbers of clicks.

As shown in Fig. 6, the support companies COM1, COM2, and COM3 post the company advertisements AD1, AD2, and AD3 on the conference holding screen 500. The company advertisements AD1, AD2, and AD3 may be displayed such that the larger the sponsor money offered by a company is, the higher the frequency of display of the company advertisement of the company on the conference holding screen 500 becomes.

Company advertisements can be arranged not only in units shown on the conference holding screen 500 but also in units of session-by-session association and program-by-program association, as shown in Fig. 7.

For example, in a case where the company COM1 manufactures and sells products related to the theme of the session SA1, the company advertisement AD1 of the company COM1 is placed in the conference holding screen 510 for the session SA1 in accordance with a request from the company COM1, as shown in Fig. 7. In a case where the company COM1 manufactures and sells products related to the program PB1 in the session SA1, the company advertisement AD1 of the company COM1 is placed in the display part displaying the program PB1 in the conference holding screen 510 for the session SA1, in accordance with a request from the company COM1.

When a display part displaying the company advertisement AD1 is clicked, the display screen switches to the company information screen 700 for the exhibition company COM1 having posted the company advertisement AD1, as shown in Fig. 11. On the company information screen 700, the participant is able to view the general display information DG and specific display information (premium information) DS on the exhibition company COM1.

### (Receiving Novelty Reception Condition)

In the following description, the exhibition company COM1 will be explained as an example among individual exhibition companies.

The exhibition company COM1 has an authority to access the novelty reception condition receiving unit 3002.

When the user information (ID and password) identifying the exhibition company COM1 is inputted on the exhibition company's terminal 131, it displays the company-side management screen (not illustrated) associated with the exhibition company COM1 on the display device 17.

On the company-side management screen, a specific action is received as a reception condition for receiving a novelty provided by the exhibition company COM1.

Specifically, the exhibition company COM1 makes setting by which reception conditions are associated respectively with novelty items NV1, NV2, and NV3 the exhibition company COM1 intends to provide. Upon completing the setting by which the novelty items are associated with the novelty reception conditions, the exhibition company COM1 carries out an operation of registering the setting details, which stores a correspondence relationship between the novelty items provided by the exhibition company COM1 and the novelty reception conditions in the database 1013 for storing novelty registration information. This process applies also to other companies. For each company, the correspondence relationship between the novelty items and the novelty reception conditions is stored in the database 1013 for storing novelty registration information.

A novelty reception condition includes a specific action specified by the exhibition company COM1. Specific actions specified by the exhibition company COM1 are, for example, as follows.
- Placing a business card on the company information screen 700 of the exhibition company COM1
- Filling in a questionnaire on the company information screen 700 of the exhibition company COM1
- The participant's having viewed the session SA1 in association with which the exhibition company COM1 has posted the company advertisement AD1
- Having acquired (downloaded) the company information (catalog) on the exhibition company COM1
- Having made a material request to the exhibition company COM1
- Having made a product estimate request to the exhibition company COM1

A novelty reception condition may further include the number of acquired points.

For example, the specific action "placing a business card on the company information screen 700 of the exhibition company COM1" and the number of points PO1 can be associated with the novelty item NV1. The specific actions "placing a business card on the company information screen 700 of the exhibition company COM1" and "filling in a questionnaire on the company information screen 700 of the exhibition company COM1" and the number of points PO2 can be associated with the novelty item NV2. The specific action "having made a product estimate request to the exhibition company COM1" can be associated with the novelty item NV3.

In the case of other exhibition companies COM2 and COM3, a novelty reception condition is stored for each novelty item, in the database 1013 for storing novelty registration information in the same manner as in the above case.

### (Receiving Reception Request)

The participant is allowed to view the correspondence relationship between the novelty items provided by the exhibition companies COM1, COM2, and COM3 and the novelty reception conditions, the correspondence relationship being stored in the database 1013 for storing novelty registration information, as a novelty list.

Fig. 12 shows an example of the novelty list. The novelty list shown in Fig. 12 is a novelty list provided by the exhibition company COM1.

In Fig. 12, novelties provided by the exhibition company COM1 are shown exemplarily, but the novelty list actually includes all novelties provided by all novelty-providing companies. By seeing the list, the participant is able to know which company provides which novelty. On the novelty list, the names of local industry companies from which products provided as novelties can be purchased may be displayed as well.

The participant has an authority to access the reception request receiving unit 3003.

When the user information (ID and password) identifying the participant is inputted on the participant's terminal 120, it displays the novelty reception request receiving screen 800 shown in Fig. 12. The participant is thus able to make a novelty reception request on the novelty reception request receiving screen 800.

A novelty the participant wants to receive is specified in a reception receiving section 810 (e.g., a dropdown list listing novelty items) on the novelty reception request receiving screen 800. The reception receiving section 810 makes up the reception request receiving unit 3003.

A case where one novelty is specified is shown in Fig. 12, but a plurality of novelties may be specified. For example, a reception request button may be provided for each of the novelties NV1, NV2, and NV3 listed on the novelty list.

### (Determining Whether or Not to Grant Reception Right)

It is assumed that the novelty (novelty item) the participant PA1 wants to receive is the novelty item NV1. The novelty item NV1 is associated with the specific action "placing a business card on the company information screen 700 of the exhibition company COM1" and with the number of points PO1. The determining unit 3004 refers to the recording unit 3001 and determines that the number of acquired points of the participant PA1 is the number of points PO1. Referring to the recording unit 3001, the determining unit 3004 determines also that the specific action "placing a business card on the company information screen 700 of the exhibition company COM1" is included in actions the participant PA1 has made. Having made both determinations, the determining unit 3004 determines that the reception condition for receiving the novelty item NV1 is satisfied.

When the determining unit 3004 determines that the novelty reception condition is satisfied, a reception right to receive the novelty item NV1 is granted to the participant PA1 on the novelty reception request receiving screen 800. For example, a specific number and URL that certify the reception right are presented on the novelty reception request receiving screen 800.

The same process is carried out in a case where the participant PA1 wants to receive the novelty item NV2. When the specific actions "placing a business card on the company information screen 700 of the exhibition company COM1" and "filling in a questionnaire on the company information screen 700 of the exhibition company COM1" are included in actions the participant PA1 has made and the number of acquired points of the participant PA1 is the number of points PO2, a reception right to receive the novelty item NV2 is granted to the participant PA1.

The same process is carried out in a case where the participant PA1 wants to receive the novelty item NV3. When the specific action "having made a product estimate request to the exhibition company COM1" is included in actions the participant PA1 has made, a reception right to receive the novelty item NV3 is granted to the participant PA1.

Another configuration in which novelty reception conditions are varied depending on participant attributes indicating participation categories in an online event is also possible.

For example, different reception conditions may be set as the reception condition for receiving the novelty item NV1 such that, for the doctor PA1 belonging to the medical society, only the specific action "placing a business card on the company information screen of the exhibition company COM1" is set as the reception condition while for the non-member doctor PB, the non-member doctor PB's having made both specific actions "placing a business card on the company information screen of the exhibition company COM1" and "the participant's having viewed the session SA1 at which the exhibition company COM1 has posted the company advertisement AD1" is set as the reception condition. In another case, the reception right to receive the novelty item NV3 may granted such that, for example, the doctor PA1 belonging to the medical society, the invited presenter PA2, and the non-member doctor PB are granted the reception right if they satisfy the receipt condition while the auditor PC and the exhibition company PD are not granted the reception right at all by being prohibited from making a specific action (e,g. "having made a product estimate request to the exhibition company COM1") for satisfying the reception condition.

According to the third embodiment, an exhibition institution, such as a support company, is able to set a specific action favorable to the exhibition institution, and only the participant having made the specific action is allowed to receive a novelty from the exhibition institution. This significantly increases opportunities for matching up the exhibition institution and the participant with each other.

The exhibition system of the third embodiment can be applied not only to corporate exhibition in an online academic conference but also to a wide variety of general exhibitions.

### (Novelty Registration/Distribution System)

An example of a novelty registration/distribution system that registers a novelty and distributes a novelty to participants will be described. The following example is implemented by, for example, mutually transmitting/receiving data via a communication network, such as the Internet. To steps 3), 4), and 5) shown below, the above exhibition system of the third embodiment can be applied. Steps of the novelty registration/distribution system will hereinafter be described.
1) A local industry company, which is a member of a chamber of commerce in a region where a scientific-society-hosted academic lecture is held, presents a list of products, such as a list of special products that can be used as novelty items, to a support company supporting the academic lecture.
2) The support company selects a novelty from the product list.
3) The support company registers the product (novelty) selected from the product list, as a novelty (a local industry company name and a product name).
4) Receive a novelty reception request from a participant.
5) Create a delivery list of novelty items (local industry company names and product names) that should be delivered to participants (addresses, names, etc., registered as user information) who have been granted novelty reception rights.
6) Send the delivery list to the local industry company and to a delivery agency.
7) According to the delivery list, the delivery agency receives the products from the local industry company and delivers the products to the participants who have been granted the novelty reception rights.

The present novelty registration/distribution system offers an advantageous effect that a local economy is vitalized and that burdens on the support company and participants are eliminated. In other words, burdens resulting from selecting novelty products, carrying the products into the venue, distributing the products to the participants, and bringing the products home are eliminated.

### (Fourth Embodiment)

An online academic conference management system according to a fourth embodiment will hereinafter be described.

In the present embodiment, an online academic conference management system that manages a plurality of online academic conferences, such as an online academic conference called conference A and an online academic conference called conference B, is assumed.

The conferences A and B are, for example, conferences with different conference schedules. The conferences A and B, however, may be conferences that are held simultaneously.

In the present specification, the term "online academic conference" refers to a scientific-society-hosted academic lecture, a conference, a symposium, a research meeting, a workshop, an assembly, a seminar, and the like.

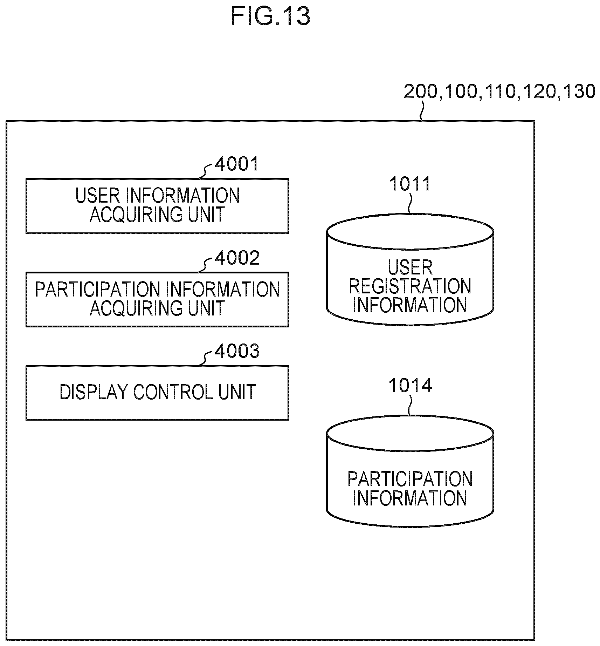

Fig. 13 is a block diagram exemplarily showing a functional configuration of the online academic conference management system according to the fourth embodiment. The server 200, the manager's terminal 100, the presenter's terminal 110, the participant's terminal 120, and the exhibition institution's terminal 130 each have the functional configuration shown in Fig. 13.

The online academic conference management system includes a user information acquiring unit 4001, a participation information acquiring unit 4002, and a display control unit 4003. The online academic conference management system further includes the user registration information database 1011 that stores user registration information on each user, such as a manager, a presenter, a participant (auditor), and an exhibition institution (exhibition company), and a participation information database 1014 that for each online academic conference, stores participation information on users participating in the online academic conference.

### (Acquiring User Information)

The following description will be made on the assumption that a user who uses the online academic conference management system is an exhibitor.

The user information acquiring unit 4001 acquires pieces of user information ID1, ID2, ID3, and ID4. The pieces of user information ID1, ID2, ID3, and ID4 each include information on a user ID identifying the name of a user and on the mail address of the user. The pieces of user information ID1, ID2, ID3, and ID4 are accounts used in common at a plurality of conferences A and B. Once the pieces of user information ID1, ID2, ID3, and ID4 are registered, registering user information every time the conferences A and B are held becomes unnecessary.

For example, when user information (ID and password) identifying a user U1 is inputted on the exhibition institution's terminal 130, the user information acquiring unit 4001 acquires the user information ID1. In the same manner, the user information acquiring unit 4001 acquires pieces of user information ID2, ID3, and ID4 on other users U2, U3, and U4, respectively. The pieces of user information ID1, ID2, ID3, and ID4 are stored in the user registration information database 1011.

### (Acquiring Participation Information)

For each of a plurality of online academic conferences, that is, the conferences A and B, and for each of users participating in the conferences A and B, the participation information acquiring unit 4002 acquires participation information.

At an online academic conference, in some cases, individual users belonging to different companies form a group, which is referred to as a "team", and exhibit products in the capacity of a team.

For example, the users U1 and U2 belong to the company COM1. The users U3 and U4 belong to the company COM2.

For example, at the conference A, the users U1, U2, and U3 form a group, i.e., a team, and exhibit products in the capacity of a first exhibition institution EX1 and a second exhibition institution EX2. At the conference B, the users U1, U2, and U4 form a group, i.e., a team, and exhibit products in the capacity of an exhibition institution EX3.

In such a case, the users U1, U2, and U3 are granted a participation authority authenticating that they are exhibitors belonging to the first exhibition institution EX1 and the second exhibition institution EX2 at the conference A. Likewise, the users U1, U2, and U4 are granted a participation authority authenticating that they are exhibitors belonging to the exhibition institution EX3 at the conference B.

For example, on the display screen of the exhibition institution's terminal 130, the users U1, U2, U3, and U4 apply for participation to the conference and the manager gives the users permission to participating in the conference. This grants the users a participation authority authenticating that they are exhibitors at the conference.

The manager may not give participation permission on an application basis but may give participation permission to users whom the manager wants to participate in the conference. For example, participation permission is given to users in the form of providing them with tickets or letting them purchase tickets.

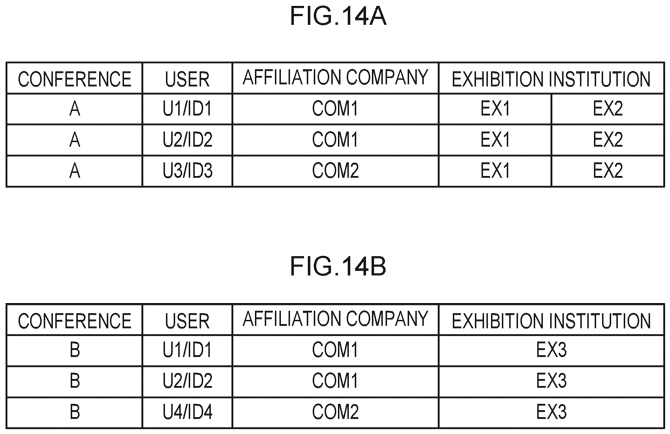

The participation information acquiring unit 4002 acquires participation information on each of the users U1, U2, U3, and U4, the participation information being shown in tables of Figs. 14(A) and 14(B).

Specifically, in association with the conference A, the participation information acquiring unit 4002 acquires information on a participation authority authenticating that the users U1, U2, and U3 are exhibitors making up the first exhibition institution EX1 and the second exhibition institution EX2 and information on the affiliation companies COM1 and COM2 to which individual exhibitors U1, U2, and U3 making up the exhibition institutions EX1 and EX2 belong (see Fig. 14(A)). Likewise, in association with the conference B, the participation information acquiring unit 4002 acquires information on a participation authority authenticating that the users U1, U2, and U4 are exhibitors making up the exhibition institution EX3 and information on the affiliation companies COM1 and COM2 to which individual exhibitors U1, U2, and U4 making up the exhibition institution EX3 belong (see Fig. 14(B)). The participation information is stored in the participation information database 1014.

It should be noted that the participation information shown in Fig. 14 is an example and that any given combination of the users making up the exhibition institutions may be chosen.

In Fig. 14(A), a combination of users making up the first exhibition institution EX1 is the same as a combination of users making up the second exhibition institution EX2. However, the combination of users making up the first exhibition institution EX1 may be made different from the combination of users making up the second exhibition institution EX2. For example, as the first exhibition institution EX1 is composed of the users U1, U2, and U3, the second exhibition institution EX2 may be composed of the users U1, U2, and U5 (which belong to the company COM3).

### (Display Control)

The display control unit 4003 is an information processing unit that generates management information such that it can be displayed on the user's terminal. The display control unit 4003, for example, displays management information corresponding to the participation authority of the user U1 on the exhibition institution's terminal 130 of the user U1 such that the management information is association with the conferences A and B in which the user U1 participates.

At the conference A, the user U1 has a participation authority as an exhibitor making up the first exhibition institution EX1 and the second exhibition institution EX2. At the conference B, the user U1 has a participation authority as an exhibitor making up the exhibition institution EX3.

On the display screen of the exhibition institution's terminal 130 of the user U1, therefore, in association with the conference A, management information is displayed, the management information including information on the first exhibition institution EX1 and the second exhibition institution EX2, individual exhibitors U1, U2, and U3 making up the exhibition institutions EX1 and EX2, the affiliation company COM1 to which the exhibitors U1 and U2 belong, and the affiliation company COM2 to which the exhibitor U3 belongs. On the display screen of the exhibition institution's terminal 130 of the user U1, in association with the conference B, management information is displayed, the management information including information on the exhibition institution EX3, individual exhibitors U1, U2, and U4 making up the exhibition institution EX3, the affiliation company COM1 to which the exhibitors U1 and U2 belong, and the affiliation company COM2 to which the exhibitor U4 belongs. This description applies also to other users U2, U3, and U4.

On the display screen of the exhibition institution's terminal 130 of the user U1, the display control unit 4003 displays a list management screen displaying a list of management information on the plurality of conferences A and B in which the user U1 participates and a separate management screen displaying management information on the separate online academic conference A (or the conference B) in which the user U1 participates, in such a way as to switch both management screens to each other in accordance with, for example, selection by the user U1. This description applies also to other users U2, U3, and U4.

### (Management Screen)

A relationship between a management screen and an exhibition institution information screen will be described.

The exhibition institution information screen will first be described.

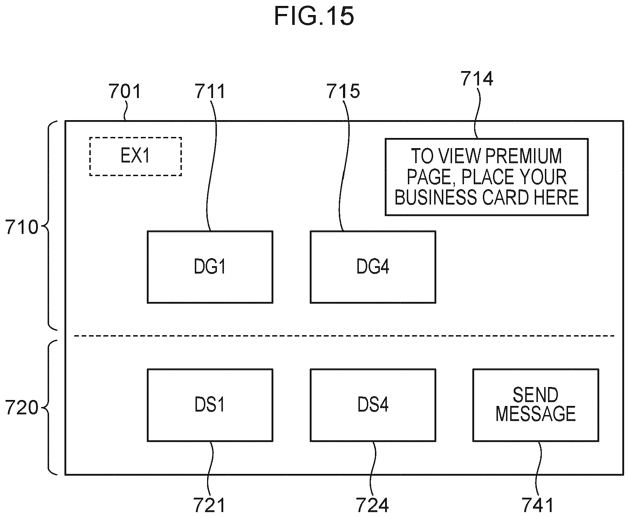

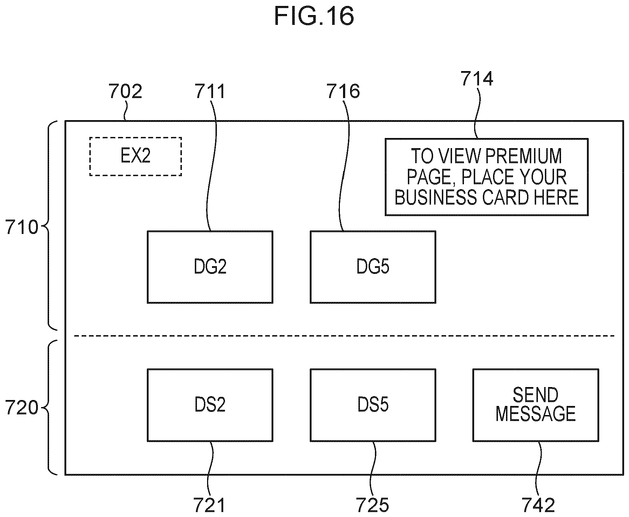

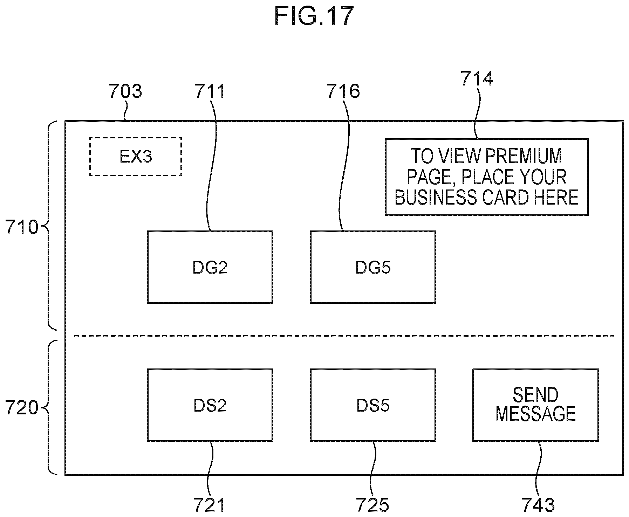

Fig. 15 is a diagram showing an exhibition institution information screen 701 for the first exhibition institution EX1 of the conference A. Fig. 16 is a diagram showing an exhibition institution information screen 702 for the second exhibition institution EX2 of the conference A. Fig.17 is a diagram showing an exhibition institution information screen 703 for the exhibition institution EX3 of the conference B.

The same constituent elements shown in the company information screen 700 of Fig. 11 are denoted by the same reference signs.

In the same manner as in the company information screen 700 shown in Fig. 11, the participant can view the general display information DG and the specific display information (premium information) DS on the first exhibition institution EX1, on the exhibition institution information screens 701, 702, and 703.

On the exhibition institution information screen 701 for the first exhibition institution EX1 of the conference A, pieces of general information DG1 and DG4 are displayed and pieces of premium information DS1 and DS4 are displayed as well.

On the exhibition institution information screen 702 for the second exhibition institution EX2 of the conference A, pieces of general information DG2 and DG5 are displayed and pieces of premium information DS2 and DS5 are displayed as well.

On the exhibition institution information screen 703 for the exhibition institution EX3 of the conference B, pieces of general information DG2 and DG5 are displayed and pieces of premium information DS2 and DS5 are displayed as well.

Pieces of general information DG1 and DG2 and premium information DS1 and DS2 are, for example, product information on the company COM1. Pieces of general information DG4 and DG5 and premium information DS4 and DS5 are, for example, product information on the company COM2.

In the same manner as the display request receiving button 714 being pressed on the company information screen 700 shown in Fig. 11, when the display request receiving button 714 on each of the exhibition institution information screens 701, 702, and 703 is pressed, the premium information DS is displayed on each of the exhibition institution information screens 701, 702, and 703 according to predetermined premium information display conditions shown Fig. 10.

The exhibition institution information screens 701, 702, and 703 include message input boxes 741, 742, and 743, respectively. To the message input boxes 741, 742, and 743, e-mail messages are inputted to make inquiries to the exhibitors U1, U2, U3, and U4 making up the exhibition institutions EX1, EX2, and EX3.

The message reads: "I'd like to know about the product.", "Send product information, please.", "Can we have an online meeting?", "Can I talk with one of your staff?", "Call me, please.", or the like. The message is inputted to each of the message input boxes 741, 742, and 743 and a send button is pressed to send the message out. Alternately, a button for selecting one of the above short sentences may be provided, in which case the button is pressed to send out a selected short message.

The message input boxes 741, 742, and 743 may be displayed on the exhibition institution information screens 701, 702, and 703 to allow message transmission, regardless of the attribute of the participant, or may be displayed on the exhibition institution information screens 701, 702, and 703 for only the participant with a specific attribute to allow such a participant to send a message. For example, there may be a case where the message input boxes 741, 742, and 743 are displayed on respective display screens of the terminals of the doctor PA1 belonging to the medical society, the invited presenter PA2, and the non-member doctor PB to allows them to send messages but are not displayed on respective display screens of the terminals of the auditor PC and the exhibition company PD.

Another configuration is also possible, in which according to respective attributes of participants, different welcome messages are displayed, the welcome messages prompting the participants to input messages to the message input boxes 741, 742, and 743. For example, such a welcome message as "Please enter a message." or "Feel free to contact us." may be displayed in accordance with the attribute of the participant.

The message input boxes 741, 742, and 743 may be displayed on the exhibition institution information screens 701, 702, and 703 to allow message transmission, regardless of whether the premium information display condition is satisfied, or the message input boxes 741, 742, and 743 may be displayed on the exhibition institution information screens 701, 702, and 703 to allow message transmission only when the premium information display condition is satisfied.

For example, at the conference A, the participant sends an "inquiry about the premium information (e.g., product information) DS1 on the company COM1" to the exhibitors U1, U2, and U3 making up the first exhibition institution EX1, via the message input box 741 on the exhibition institution information screen 701 for the first exhibition institution EX1.

At the conference A, the participant sends an "inquiry about the premium information (e.g., product information) DS4 on the company COM2" to the exhibitors U1, U2, and U3 making up the first exhibition institution EX1, via the message input box 741 on the exhibition institution information screen 701 for the first exhibition institution EX1.

At the conference A, the participant sends an "inquiry about the premium information (e.g., product information) DS2 on the company COM1" to the exhibitors U1, U2, and U3 making up the second exhibition institution EX2, via the message input box 742 on the exhibition institution information screen 702 for the second exhibition institution EX2.

At the conference A, the participant sends an "inquiry about the premium information (e.g., product information) DS5 on the company COM2" to the exhibitors U1, U2, and U3 making up the second exhibition institution EX2, via the message input box 742 on the exhibition institution information screen 702 for the second exhibition institution EX2.

At the conference B, the participant sends an "inquiry about the premium information (e.g., product information) DS2 on the company COM1" to the exhibitors U1, U2, and U4 making up the exhibition institution EX3, via the message input box 743 on the exhibition institution information screen 703 for the exhibition institution EX3.

At the conference B, the participant sends an "inquiry about the premium information (e.g., product information) DS5 on the company COM2" to the exhibitors U1, U2, and U3 making up the second exhibition institution EX2, via the message input box 743 on the exhibition institution information screen 703 for the exhibition institution EX3.

The management screen is a screen showing management information for managing the exhibition institution information screens 701, 702, and 703. Specifically, the management screen is used to construct the exhibition institution information screen 701, 702, or 703 or to respond to an incoming message from the exhibition institution information screens 701, 702, and 703.

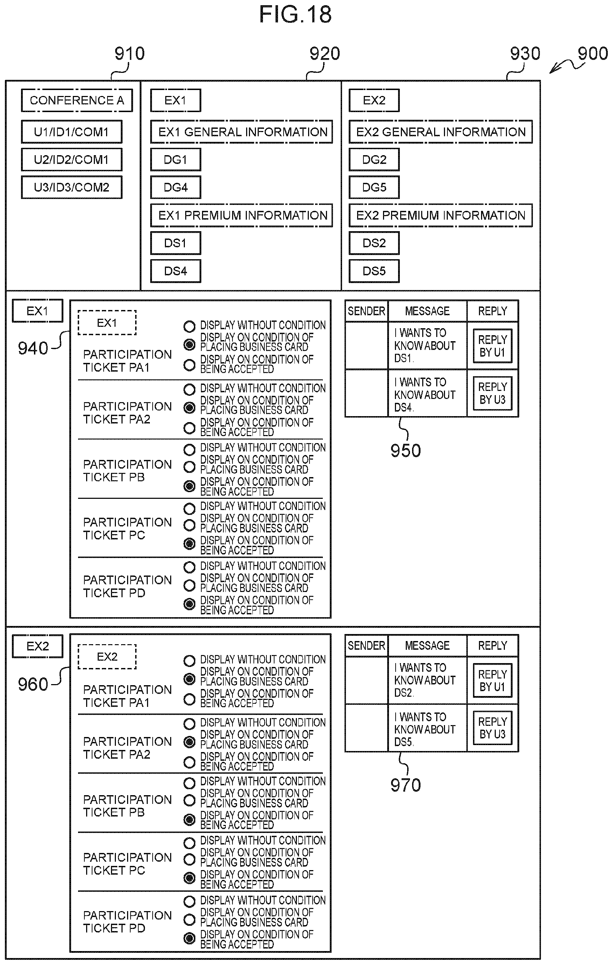

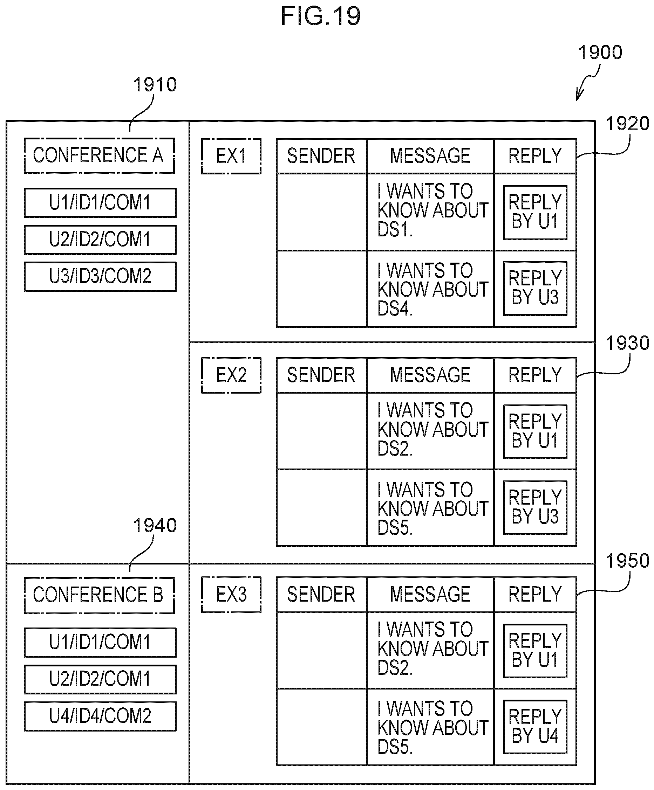

Fig. 18 is a diagram exemplarily showing a separate management screen 900 separately displaying management information on the conference A. Fig. 19 is a diagram exemplarily showing a list management screen 1900 displaying a list of management information on the conferences A and B.

The separate management screen 900 includes, for example, an exhibitor display section 910, a first exhibition institution information display section 920, a second exhibition institution information display section 930, a first exhibition institution premium information display condition setting section 940, a first exhibition institution message display section 950, a second exhibition institution premium information display condition setting section 960, and a second exhibition institution message display section 970.

The exhibitor display section 910 displays respective user names "U1, U2, U3" of exhibitors making up the first exhibition institution EX1 and the second exhibition institution EX2 that are the exhibition institutions of the conference A, user information (mail addresses, etc.) "ID1, ID2, ID3" on the exhibitors, the name "COM1" of the affiliation company to which the exhibitors U1 and U2 belong, and the name "COM2" of the affiliation company to which the exhibitor U3 belongs.

The first exhibition institution information display section 920 displays the contents of pieces of the general information DG1 and DG4 and premium information DS1 and DS4 that are displayed on the exhibition institution information screen 701 for the first exhibition institution EX1.

The second exhibition institution information display section 930 displays the contents of pieces of the general information DG2 and DG5 and premium information DS2 and DS5 that are displayed on the exhibition institution information screen 702 for the second exhibition institution EX2.

The first exhibition institution premium information display condition setting section 940 displays display conditions according to which pieces of the premium information DS1 and DS4 shown on the exhibition institution information screen 701 for the first exhibition institution EX1 are displayed on the display screen of the participant's terminal.

The first exhibition institution message display section 950 displays the sender (a user name, mail address, etc.) of an incoming message transmitted via the message input box 741 on the exhibition institution information screen 701 for the first exhibition institution EX1, the content of the incoming message and of a reply, and the name (user name) of an exhibitor who replies to the incoming message. A plurality of exhibitors may reply to the incoming message.

The second exhibition institution premium information display condition setting section 960 displays display conditions according to which pieces of the premium information DS2 and DS5 shown on the exhibition institution information screen 702 for the second exhibition institution EX2 are displayed on the display screen of the participant's terminal.

The second exhibition institution message display section 970 displays the sender (a user name, mail address, etc.) of an incoming message transmitted via the message input box 742 on the exhibition institution information screen 702 for the second exhibition institution EX2, the content of the incoming message and of a reply, and the name (user name) of an exhibitor who replies to the incoming message. A plurality of exhibitors may reply to the incoming message.

The list management screen 1900 includes, for example, a conference A/exhibitor display section 1910, a conference A/first exhibition institution message display section 1920, a conference A/second exhibition institution message display section 1930, a conference B/exhibitor display section 1940, and a conference B/exhibition institution message display section 1950.

The conference A/exhibitor display section 1910 displays respective user names "U1, U2, U3" of exhibitors making up the first exhibition institution EX1 and the second exhibition institution EX2 that are the exhibition institutions of the conference A, user information (mail addresses, etc.) "ID1, ID2, ID3" on the exhibitors, the name "COM1" of the affiliation company to which the exhibitors U1 and U2 belong, and the name "COM2" of the affiliation company to which the exhibitor U3 belongs.

The conference A/first exhibition institution message display section 1920 displays the sender (a user name, mail address, etc.) of an incoming message transmitted via the message input box 741 on the exhibition institution information screen 701 for the first exhibition institution EX1 of the conference A, the content of the incoming message and of a reply, and the name (user name) of an exhibitor who replies to the incoming message. A plurality of exhibitors may reply to the incoming message.

The conference A/second exhibition institution message display section 1930 displays the sender (a user name, mail address, etc.) of an incoming message transmitted via the message input box 742 on the exhibition institution information screen 702 for the second exhibition institution EX2 of the conference A, the content of the incoming message and of a reply, and the name (user name) of an exhibitor who replies to the incoming message. A plurality of exhibitors may reply to the incoming message.

The conference B/exhibitor display section 1940 displays respective user names "U1, U2, U4" of exhibitors making up the exhibition institution EX3 of the conference B, user information (mail addresses, etc.) "ID1, ID2, ID4" on the exhibitors, the name "COM1" of the affiliation company to which the exhibitors U1 and U2 belong, and the name "COM2" of the affiliation company to which the exhibitor U4 belongs.

The conference B/exhibition institution message display section 1950 displays the sender (a user name, mail address, etc.) of an incoming message transmitted via the message input box 743 on the exhibition institution information screen 703 for the exhibition institution EX3 of the conference B, the content of the incoming message and of a reply, and the name (user name) of an exhibitor who replies to the incoming message. A plurality of exhibitors may reply to the incoming message.

It should be noted that the separate management screen 900 in Fig. 18 and the list management screen 1900 in Fig. 19 are examples and that display layout on these screens can be changed arbitrarily as a display section is added to or deleted from the screens arbitrarily.

At the conference A, the user U1 has a participation authority as an exhibitor of the first exhibition institution EX1 and the second exhibition institution EX2. At the conference B, the user U1 has a participation authority as an exhibitor of the exhibition institution EX3.

When user information (ID and password) identifying the user U1 is inputted on the exhibition institution's terminal 130, therefore, it displays the separate management screen 900 and the list management screen 1900 on the display device 17. The above description applies also to the user U2 having a participation authority as an exhibitor of the first and second exhibition institutions EX1 and EX2 and an exhibitor of the exhibition institution EX3.

In contrast, the user U3 has a participation authority as an exhibitor of the first exhibition institution EX1 and the second exhibition institution EX2 at the conference A but does not have a participation authority as an exhibitor of the exhibition institution EX3 at the conference B.

For this reason, when user information (ID and password) identifying the user U3 is inputted on the exhibition institution's terminal 130, it displays the separate management screen 900 on the display device 17 and also displays the list management screen from which management information on the exhibition institution EX3 at the conference B is deleted, on the display device 17.

The user U4 has a participation authority as an exhibitor of the exhibition institution EX3 at the conference B but does not have a participation authority as an exhibitor of the first exhibition institution EX1 and the second exhibition institution EX2 at the conference A.

For this reason, when user information (ID and password) identifying the user U4 is inputted on the exhibition institution's terminal 130, it displays a separate management screen for the conference B similar to the separate management screen 900 for the conference A, on the display device 17 and also displays the list management screen from which management information on the first and second exhibition institutions EX1 and EX2 at the conference A is deleted, on the display device 17.

### (Handling Message on Separate Management Screen)

In the following, an assumed case where the separate management screen 900 of Fig. 18 and the list management screen 1900 of Fig. 19 are displayed on the display device 17 of the exhibition institution's terminal 130 of the exhibitor U1 will be described.

According to the present embodiment, inquiries about products from a plurality of companies can be handled on one screen.

Specifically, by viewing the first exhibition institution message display section 950 of the separate management screen 900, the exhibitor U1 is able to notice messages "inquiry about the premium information DS1 on the company COM1" and "inquiry about the premium information DS4 on the company COM2" that have been transmitted from a participant via the exhibition institution information screen 701 for the first exhibition institution EX1.

The exhibitor U1 belonging to the company COM1 is therefore able to reply to the inquiry about the premium information DS1 on a product of the company COM1 to which the exhibitor U1 belongs.

The "inquiry about the premium information (e.g., product information) DS4 on the company COM2", on the other hand, may be handled by a different exhibitor. For example, the exhibitor U1 may give the different exhibitor U3, who belongs to the company COM2 and is therefore familiar with the product information DS4 on the company COM2, an instruction to reply to the inquiry. For example, since the affiliation company COM2 and the e-mail address of the exhibitor U3 are displayed in the exhibitor display section 910, the exhibitor U1 sends, from the separate management screen 900, an e-mail carrying an instruction to reply to the inquiry about the product information DS4 on the company COM2, to the different exhibitor U3. Receiving the incoming email, the exhibitor U3 is able to reply, on the separate management screen 900 on the exhibitor U3's terminal, to the message "inquiry about the premium information DS4 on the company COM2" that has been transmitted from the participant via the exhibition institution information screen 701 for the first exhibition institution EX1.

The above message handling applies also to the second exhibition institution message display section 970 of the separate management screen 900.

An "inquiry about the premium information DS2 on the company COM1", which is a message having been transmitted from a participant via the exhibition institution information screen 702 for the second exhibition institution EX2, is replied by the exhibitor U1 familiar with the premium information DS2 on the company COM1. An "inquiry about the premium information DS5 on the company COM2", which is a message having been transmitted from a participant also via the exhibition institution information screen 702 for the second exhibition institution EX2, is replied by the different exhibitor U3 familiar with the premium information DS5 on the company COM2, according to, for example, an instruction given by the exhibitor U1.

### (Message Handling on List Management Screen)

According to the present embodiment, inquiries made at a plurality of conferences can be handled on one screen.

By viewing the conference A/first exhibition institution message display section 1920 of the list management screen 1900, the exhibitor U1 is able to notice a message "inquiry about the premium information DS1 on the company COM1" that has been transmitted from a participant via the exhibition institution information screen 701 for the first exhibition institution EX1 at the conference A. By viewing the conference B/exhibition institution message display section 1950, the exhibitor U1 is able to notice a message "inquiry about the premium information DS2 on the company COM1" that has been transmitted from a participant via the exhibition institution information screen 703 for the exhibition institution EX3 at the conference B.

On the same list management screen 1900, therefore, the exhibitor U1 is able to reply to different inquires made at different conferences A and B. This makes it unnecessary to handle information on different management screens set respectively for a plurality of academic conferences.

In the same manner, by viewing the conference A/first exhibition institution message display section 1920 of the list management screen 1900, the exhibitor U1 is able to notice a message "inquiry about the premium information DS4 on the company COM2" that has been transmitted from a participant via the exhibition institution information screen 701 for the first exhibition institution EX1 at the conference A, and by viewing the conference B/exhibition institution message display section 1950, the exhibitor U1 is able to notice a message "inquiry about the premium information DS5 on the company COM2" that has been transmitted from a participant via the exhibition institution information screen 703 for the exhibition institution EX3 at the conference B.

On the same list management screen 1900, therefore, the exhibitor U1 is able to handle different inquires made at different conferences A and B, by giving the different exhibitor U3, who belongs to the company COM2 and is therefore familiar with the product information DS4 on the company COM2, an instruction to reply to the inquiry and giving the different exhibitor U4, who belongs to the company COM2 and is therefore familiar with the premium information DS5 on the company COM2, an instruction to reply to the inquiry. As a result, at the conference A, the different exhibitor U3 at the conference A replies to the inquiry, while at the conference B, the different exhibitor U4 at the conference B replies to the inquiry. This makes it unnecessary to handle information on different management screens set respectively for a plurality of academic conferences.

In the above, an assumed case where a message transmitted from a participant via the exhibition institution information screen is sent to all exhibitors making up the exhibition institutions has been described. Another configuration, however, is also possible, in which a message is sent only to a specific exhibitor making up the exhibition institutions, depending on the content of the message.

For example, when the message is an inquiry about the company COM1, the message may be sent only to the users U1 and U2 belonging to the company COM1, and when the message is an inquiry about the company COM2, the message may be sent only to the users U3 and U4 belonging to the company COM2. When the message is an inquiry about technology development of the company COM1, the message may be sent only to the user U1 who is in charge of technology development at the company COM1, and when the message is an inquiry about sales of the company COM1, the message may be sent only to the user U2 who is in charge of sales at the company COM1.

### (Modification of List Management Screen)

The list management screen may display a list of premium information display conditions. The first exhibition institution premium information display condition setting section 940, the second exhibition institution premium information display condition setting section 960, and a premium information display condition setting section for setting a condition for displaying the premium information indicated on the exhibition institution information screen 703 for the exhibition institution EX3 at the meeting B are placed on one screen. By this arrangement, a list of premium information display conditions at each of the conferences A and B can be displayed collectively. Thus, the premium information display conditions at each of the conferences A and B can be set on one screen. This makes it unnecessary to handle information on different management screens set respectively for a plurality of academic conferences.

The list management screen may display a list of exhibition institution information. The first exhibition institution information display section 920, the second exhibition institution information display section 930, and an exhibition institution information display section for displaying the general information and premium information indicated on the exhibition institution information screen 703 for the exhibition institution EX3 at the conference B are placed on one screen. By this arrangement, a list of exhibition institution information at each of the conferences A and B can be displayed collectively. Thus, the exhibition institution information at each of the conferences A and B can be corrected or modified on one screen. This makes it unnecessary to handle information on different management screens set respectively for a plurality of academic conferences.

For example, data of the second exhibition institution information display section 930 can be copied to use the copied data as the exhibition institution information display section for the conference B. This makes it unnecessary to newly generate and register the general information DG2 and DG5 and premium information DS2 and DS5 that are on the exhibition institution information screen 703 for the exhibition institution EX3 at the conference B.

The list management screen used preferably in a case where a user at an online academic conference has a participation authority as an exhibitor has been described above. However, in any one of cases where the user at the online academic conference is a manager, is a presenter (chairperson, presenter, etc.), is a participant (auditor), and is a user having participation authorities as the manager, presenter, and the participant, the list management screen for listing management information on each conference can be set in the same manner as in the case of the user being the exhibitor.

### (List Management Screen for Manager)

For example, an item of management information (e.g., a presenter/manager list) on the conference preparation screen 600 shown in Fig. 8 or the entire management information on the same is placed on one screen where the management information is viewed collectively in association with each conference. This creates a list management screen for users each having a participation authority as a manager. Thus, preparations for sessions in the conferences A and B can be carried out simultaneously on one screen. This makes it unnecessary to handle information on different management screens set respectively for a plurality of academic conferences.

### (List Management Screen for Presenter)

For example, the conference preparation screen for presenter 610 shown in Fig. 9 may be used as a list management screen for users having a participation authority as a presenter (chairperson). As a result, preparations for presentations at sessions in the conferences A and B can be carried out simultaneously on one screen. This makes it unnecessary to handle information on different management screens set respectively for a plurality of academic conferences.

### (List Management Screen for Audit)

For example, a novelty list shown in the novelty reception request receiving screen 800 shown in Fig. 12 is placed on one screen where the novelty list can be viewed collectively in association with each conference. This creates a list management screen for users each having a participation authority as an auditor. Thus, novelty reception applications at the conferences A and B can be made simultaneously on one screen. This makes it unnecessary to handle information on different management screens set respectively for a plurality of academic conferences.

The novelty reception request receiving screen 800 may be displayed on the display screen of the participant's terminal of every participant, regardless of the attribute of the participant, or may be displayed only on the display screen of the participant's terminal of a participant having a specific attribute. In the latter case, for example, the novelty reception request receiving screen 800 is displayed on the display screens of the terminals of the doctor PA1 belonging to the medical society, the invited presenter PA2, and the non-member doctor PB but is not displayed on the display screens of the terminals of the auditor PC and the exhibition company PD.

A novelty list set according to the attribute of a participant may be displayed.

In such a case, for example, a novelty list listing all novelty items is displayed on the display screens of the terminals of the doctor PA1 belonging to the medical society, the invited presenter PA2, and the non-member doctor PB, but on the display screens of the terminals of the audit PC and the exhibition company PD, a novelty list not including a specific novelty item that cannot be provided to the audit PC and the exhibition company PD is displayed.

In some cases, a user who is an exhibitor of an exhibition institution may serve also as a presenter at the same online academic conference. In such a case, for example, management information shown on the list management screen 1900 for an exhibitor and management information shown in the conference preparation screen for presenter 610 can be placed together on one screen to create a list management screen for a user who serve as both exhibitor and presenter.

### (Fifth Embodiment)

An online event handout providing system according to a fifth embodiment will hereinafter be described.

An object of an invention according to the present embodiment is, at implementation of such an event as an online exhibition, to reduce cost required for handouts to the minimum, compared with a conventional case, and at the same time, to increase opportunities for exchanges, matching, and the like between a handout provider and a handout recipient as much as possible.

Events to which the present embodiment is applied include all kinds of events, such as online exhibitions, academic conferences, ordinary conferences, information exchange gatherings, lectures, and matching events, which are all kinds of online events in which a provider participant, who provides handouts, can provide a handout to a recipient candidate participant, who can be a candidate for receiving the handout.

In the present specification, an online event is a concept including a hybrid event. An online event is not necessarily entirely held online. For example, an event using a real event venue and live streaming or a virtual room at the same time is also included in the concept of the online event.

Handouts to which the present embodiment is applied include all kinds of handouts, such as novelties, sales promotion articles, souvenirs, and samples, that cannot be distributed as real stuff.

In the present embodiment, an entity (referred to as a provider participant) that distributes (provides) handouts is a person who distributes handouts to participants in an event, and such persons include all kinds of event participants, such as corporate organizations including companies, institutions, and associations, and individuals including presenters and lecturers.

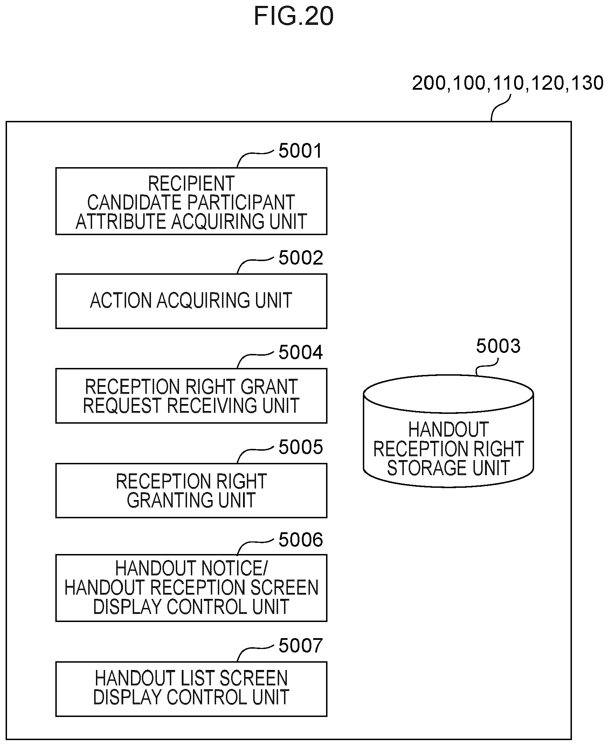

Fig. 20 is a block diagram exemplarily showing a functional configuration of the online event handout providing system according to the fifth embodiment. The server 200, the manager's terminal 100, the presenter's terminal 110, the participant's terminal 120, and the exhibition institution's terminal 130 each have the functional configuration shown in Fig. 20.

The online event handout providing system includes a recipient candidate participant attribute acquiring unit 5001, an action acquiring unit 5002, a handout reception right storage unit 5003, a reception right grant request receiving unit 5004, a reception right granting unit 5005, a handout notice/handout reception screen display control unit 5006, and a handout list screen display control unit 5007.

In the present embodiment, the content of a right to receive the handout, the presence/absence and the content of display of a handout notice screen and a handout reception screen, and the presence/absence and the content of display of a handout list screen are uniquely determined according to a participant attribute indicating the participant category of a recipient candidate participant in an online event and to an action the recipient candidate participant has made in the online event to a provider candidate of the online event. The system will now be described. The following description will be made on the assumption that the present embodiment is applied to an online academic conference. As described above, however, the present embodiment is applied not only to the online academic conference but also to all kinds of other events.

### (Recipient Candidate Participant Attribute Acquiring Unit)

The recipient candidate participant attribute acquiring unit 5001 acquires an attribute of a recipient candidate participant.

The recipient candidate participant is an event participant who is a candidate for a handout recipient.

The attribute of the recipient candidate participant is the doctor PA1 belonging to the medical society, the invited presenter PA2, the non-member doctor PB, the auditor PC, or the exhibition company PD.

### (Action Acquiring Unit)

In association with a recipient candidate participant, the action acquiring unit 5002 acquires an action the recipient candidate participant has made to a provider participant.

This action refers to an action the recipient candidate participant has made to the provider participant. Such actions include, for example, "no action", "visiting the booth", "placing a business card", "filling in a questionnaire", "viewing a session carrying a company advertisement", "acquiring (downloading) company information (catalog)", "making a material request", "making a product estimate request", and "applying for a product demonstration". In the present specification, the participant's action or act refers to an action or act the participant has made to a different participant, such as an exhibition institution participating or making exhibition in such an online event as an academic conference or an exhibition.

### (Handout Reception Right Storage Unit)

The handout reception right storage unit 5003 stores rights to receive handouts in accordance with the attributes of recipient candidate participants and with the content of actions the recipient candidate participants have made to provider participants.

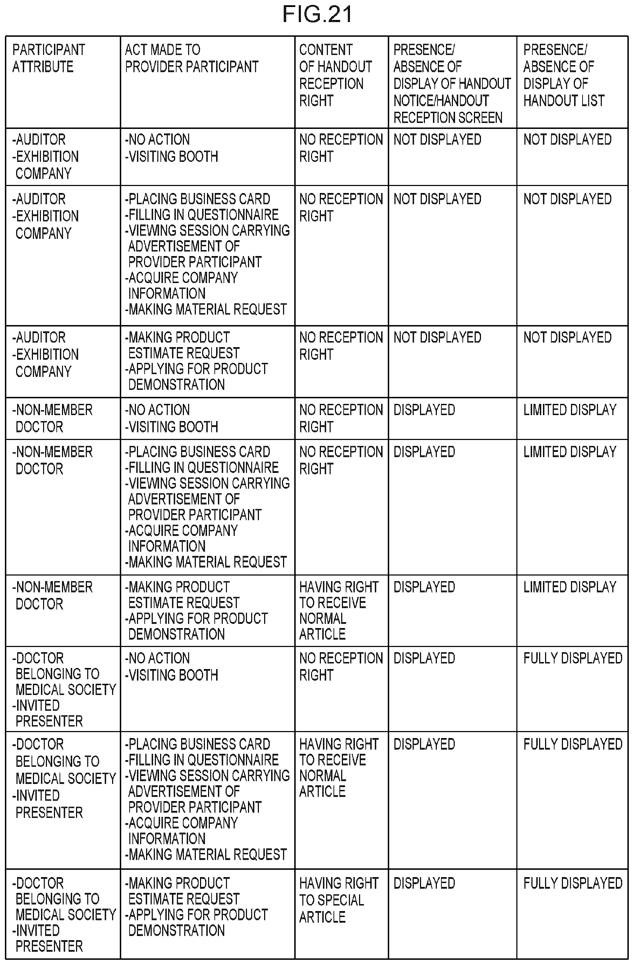

Fig. 21 is a table showing data stored in the handout reception right storage unit 5003 of the fifth embodiment and data for display control. Fig. 21 shows an example of data stored in the handout reception right storage unit 5003.

As shown in Fig. 21, data indicating the contents of rights to receive handouts are stored in the table in association with the attributes of recipient candidate participants and with the contents of actions the recipient candidate participants have made to provider participants.

In a case of handouts provided by the exhibition company COM1, the contents of the reception rights to receive the handouts include "no reception right", "allowed to receive a normal article NV11", and "allowed to receive a special article NV12".

As shown in Fig. 21, when the recipient candidate participants' attributes and actions are different, the contents of the reception rights to receive the handouts become different accordingly. For example, when a participant who is the auditor PC makes an action "making a product estimate request", the content of the reception right to receive the handout in this case remains "no reception right". When a participant who is the non-member doctor PB makes the same action "making a product estimate request", this participant acquires the reception right "allowed to receive a normal article NV11". When a participant who is the doctor PA1 belonging to the medical society makes the same action "making a product estimate request", this participant acquires the reception right "allowed to receive a special article NV12", in which case the special article NV12 is more expensive than the normal article NV11.

When a participant who is the doctor PA1 belonging to the medical society makes an action "placing a business card", this participant acquires the reception right "allowed to receive a normal article NV11". When a participant who is the non-member doctor PB or the auditor PC makes the same action "placing a business card", this participant's reception right remains "no reception right" and the participant is not able to acquire the reception right "allowed to receive a normal article NV11".

### (Reception Right Grant Request Receiving Unit)

The reception right grant request receiving unit 5004 receives a request for being granted a handout reception right, from a recipient candidate participant.

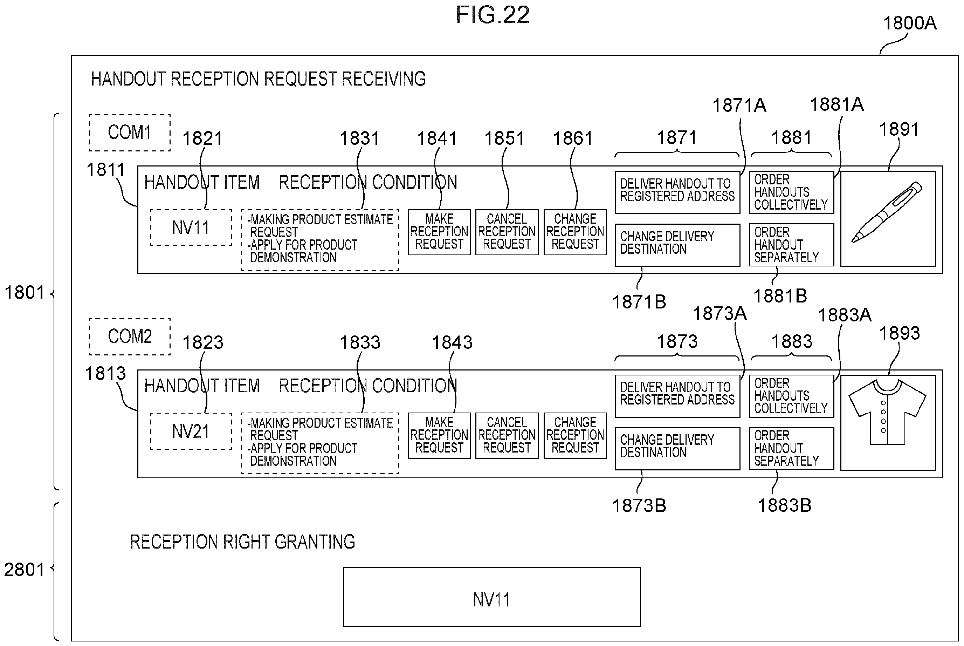

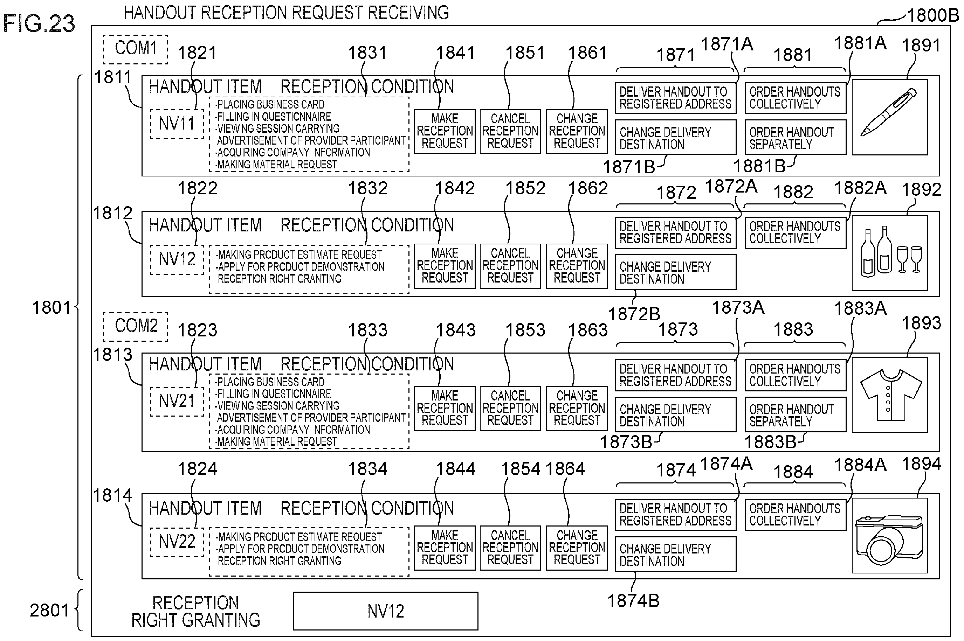

Figs. 22 and 23 show handout notice/reception/list screens 1800A and 1800B similar to the screen shown in Fig. 12. When user information (ID and password) identifying a recipient candidate participant is inputted on the participant's terminal 120, it displays the handout notice/reception/list screens 1800A and 100B shown in Figs. 22 and 23, which allows the reception candidate participant to make a handout reception request on the handout notice/reception/list screens 1800A and 1800B.

A handout list display section 1801 of each of the handout notice/reception/list screens 1800A and 1800B displays a list of handouts. In the handout list display section 1801 of the handout notice/reception/list screen 1800A, for example, only the normal article NV11 is displayed as a handout item provided by the exhibition company COM 1, which is a provider participant. In the handout list display section 1801 of the handout notice/reception/list screen 1800B, the normal article NV11 and the special article NV12 are displayed as handout items also provided by the exhibition company COM 1, which is a provider participant.

Reception conditions are displayed in association respectively with the normal article NV11 and the special article NV12. A reception condition includes the attribute of a recipient candidate participant using the participant's terminal 120 (the attribute is not displayed on the screens of Figs. 22 and 23), the attribute being shown in Fig. 21, and an action the recipient candidate participant using the participant's terminal 120 has made to a provider participant.

Reception conditions are displayed in association respectively with the normal article NV11 and the special article NV12.

The recipient candidate participant, for example, is able to make a request for being granted a reception right by, for example, pressing a reception request receiving button 1841 or 1842 on the handout notice/reception/list screen 1800A or 1800B, the reception request receiving button being associated with a handout the recipient candidate participant wants to receive (normal article NV11, special article NV12). The reception request receiving buttons 1841 and 1842 make up the reception right grant request receiving unit 5004.

### (Reception Right Granting Unit)

The reception right granting unit 5005 extracts a handout reception right from the handout reception right storage unit 5003, the handout reception right corresponding to a recipient candidate participant attribute acquired as the attribute of a recipient candidate participant whose request for being granted a reception right has been received by the reception right grant request receiving unit 5004 and to an action content acquired in association with the recipient candidate participant. The reception right granting unit 5005 then grants the extracted handout reception right to the recipient candidate participant.

Whether or not to grant the handout reception right is determined according to the "participant attribute" of the recipient candidate participant using the participant's terminal 120, the participant attribute being shown in Fig. 21, and to an action the recipient candidate participant using the participant's terminal 120 has made to the "provider participant".

A case is assumed where a handout that a recipient candidate participant having the attribute of the non-member doctor PB wants to receive is the item "normal article NV11". When the recipient candidate participant having the attribute of the non-member doctor PB has made the action "making a product estimate request", the recipient candidate participant satisfies a condition for being granted the reception right "allowed to receive a normal article NV11". When it is determined that the reception candidate participant satisfies this condition, the reception right to receive the handout item "normal article NV11" is granted, on the handout notice/reception/list screen 1800A, to the recipient candidate participant having the attribute of the non-member doctor PB. For example, on a reception right display section 2801 of the handout notice/reception/list screen 1800A, a notice of having granted the reception right to receive the handout item "normal article NV11" is displayed.

The same process is carried out also in a case where a recipient candidate participant having the attribute of the doctor PA1 belonging to the medical society wants to receive the handout item "special article NV12". When the recipient candidate participant having the attribute of the doctor PA1 belonging to the medical society has made the action "making a product estimate request", the recipient candidate participant satisfies a condition for being granted the reception right "allowed to receive the special article NV12". When it is determined that the reception candidate participant satisfies this condition, the reception right to receive the handout item "special article NV12" is granted, on the handout notice/reception/list screen 1800B, to the recipient candidate participant having the attribute of the doctor PA1 belonging to the medical society. For example, on the reception right display section 2801 of the handout reception request receiving screen 1800B, a notice of having granted the reception right to receive the handout item "special article NV12" is displayed.

### (Handout Notice Screen Display Control Unit, Handout Reception Screen Display Control Unit, and Handout List Screen Display Control Unit)

The handout notice/handout reception screen display control unit 5006 displays, on the display device 17 of the participant's terminal 120, a handout notice screen for noticing a recipient candidate participant of a handout that a provider participant provides to the recipient candidate participant. The handout notice/handout reception screen display control unit 5006 displays also, on the display device 17 of the participant's terminal 120, a handout reception screen for receiving a handout reception request from the recipient candidate participant.

The handout list screen display control unit 5007 displays, on the display device 17 of the participant's terminal 120, a handout list screen indicating a list of handouts the provider participant provides to recipient candidate participants.

In accordance with the attribute of the recipient candidate participant, the handout notice/handout reception screen display control unit 5006 controls the presence/absence of display of the handout notice screen and the same of the handout reception screen on the display screen of the participant's terminal 120 of the recipient candidate participant.

In accordance with the attribute of the recipient candidate participant, the handout list screen display control unit 5007 controls the content of display of the handout list screen and the presence/absence of display of the same on the display screen of the participant's terminal 120 of the recipient candidate participant.

Control of the presence/absence of display of the handout notice screen and the same of the handout reception screen and control of the content of display of the handout list screen and the presence/absence of display of the same are executed according to the attributes of recipient candidate participants each using the participant's terminal 120, as shown in Fig. 21.

The above handout notice screen, handout reception screen, and handout list screen may be displayed separately on different screens or may be displayed together as a common screen.

In the following, a case where the handout notice screen, the handout reception screen, and the handout list screen are displayed together as the common handout notice/reception/list screen will be described as an example.

Figs. 22 and 23 show the above common handout notice/reception/list screens 1800 A and 1800B, respectively. On each of the handout notice/reception/list screens 1800 A and 1800B, the handout list display section 1801 is displayed.

The handout list display section 1801 of the handout notice/reception/list screen 1800B shown in Fig. 23 includes handout display sections 1811 and 1812 corresponding to the handouts NV11 and NV12 provided by the exhibition company COM1, and handout display sections 1813 and 1814 corresponding to handouts NV21 and NV22 provided by the exhibition company COM2. The handout NV21 provided by the exhibition company COM2 is a "normal article" similar to the handout NV11 provided by the exhibition company COM1. The handout NV22 provided by the exhibition company COM2 is a "special article" similar to the distribution NV11 provided by the exhibition company COM1.

The handout display sections 1811, 1812, 1813, and 1814 are display units related to the handout items NV11, NV12, NV21, and NV22, respectively.

The handout display sections 1811, 1812, 1813, and 1814 include item display sections 1821, 1822, 1823, and 1824, reception condition display sections 1831, 1832, 1833, and 1834, reception request receiving buttons 1841, 1842, 1843, and 1844, cancel buttons 1851, 1852, 1853, and 1854, reception content change instruction sections 1861, 1862, 1863, and 1864, delivery destination address instruction sections 1871, 1872, 1873, and 1874, ordering method instruction sections 1881, 1882, 1883, and 1884, and 3D display sections 1891, 1892, 1893, and 1894, respectively.

The item display sections 1821, 1822, 1823, and 1824 display the handout items NV11, NV12, NV21, and NV22, respectively. The reception condition display sections 1831, 1832, 1833, and 1834 display reception conditions for receiving the handout items NV11, NV12, NV21, and NV22, respectively.

When a recipient candidate participant presses the reception request receiving button 1841, 1842, 1843, or 1844, a reception request for receiving the handout NV11, NV12, NV21, or NV22 is received.

When the recipient candidate participant presses the cancel button 1851, 1852, 1853, or 1854, reception of the reception request for receiving the handout NV11, NV12, NV21, or NV22 is canceled.

By inputting a changed reception content to the reception content change instruction section 1861, 1862, 1863, or 1864, the recipient candidate participant is able to change the content of a reception request for receiving the handout NV11, NV12, NV21, or NV22. Changing the content of a reception request for receiving the handout is an item of changing, for example, the quantity, color, size, and the like of the handout.

The delivery destination address instruction sections 1871, 1872, 1873, and 1874 include registered address instruction sections 1871A, 1872A, 1873A, and 1874A and delivery destination change instruction sections 1871B, 1872B, 1873B, and 1874B, respectively. When the registered address instruction section 1871A, 1872A, 1873A, or 1874A is selected, an address registered in advance by the recipient candidate participant is determined to be the delivery destination of the handout NV11, NV12, NV21, or NV22. When an address is inputted to a delivery destination change instruction section 1870B (delivery destination change instruction section 1871B, 1872B, 1873B, or 1874B), the delivery destination of the handout NV11, NV12, NV21, or NV22 can be changed to an address different from the address registered in advance as the delivery destination. For example, when the recipient candidate participant wants to change the delivery destination of the handout NV11 to the participant's home address, the recipient candidate participant puts the home address in the delivery destination change instruction unit 1871B.

The ordering method instruction sections 1881, 1882, 1883, and 1884 include collective ordering instruction sections 1881A, 1882A, 1883A, and 1884A, respectively, and the ordering method instruction sections 1881 and 1883 further include separate ordering instruction sections 1881B and 1883B, respectively. Selecting the collective ordering instruction section 1881A, 1882A, 1883A, or 1884A gives an instruction to adopt an ordering method (which will hereinafter be referred to as collective ordering) by which the corresponding handout is ordered collectively together with other handouts at the end of an online event holding period. Selecting the separate ordering instruction section 1881B or 1883B gives an instruction to adopt an ordering method (which will hereinafter be referred to as separate ordering) by which the corresponding handout is separately ordered at a point of time of receiving a reception request, without waiting for the end of the online event holding period.

In many cases, handouts are ordered to a manufacturer after the number of handouts to be delivered to participants is determined at the end of the online event holding period. It is preferable in such a case that the determined number of handouts are ordered collectively to the manufacturer after the end of the online event holding period and then the handouts are delivered to individual participants. Such handout delivery is achieved by the collective ordering method. However, some handouts can be delivered on an order-by-order basis, without the need of waiting for the end of the online event holding period. Such a handout can be ordered separately. For example, NV11 and NV21 can be ordered separately, while the handouts NV12 and NV22 need to be ordered by the collective ordering method.

The handouts NV11, NV12, NV21, and NV22 may be displayed in the form of 3D models in the same manner as 3D product images displayed on the above-described company information screen 700.

The 3D display sections 1891, 1892, 1893, and 1894 display 3D models of the handouts NV11, NV12, NV21, and NV22, respectively. In addition, stereoscopic images of the handouts NV11, NV12, NV21, and NV22 may be created by a stereoscopic vision technique utilizing a parallax principle, etc. Further, the 3D models of the handouts NV11, NV12, NV21, and NV22 may be rotated so that each part of the handouts can be viewed from every point of a 360-degree viewing angle. Likewise, the product 3D model displayed on the company information screen 700 may also be rotated so that each part of the product can be viewed from every point of a 360-degree viewing angle.

The handout list display section 1801 of the handout notice/reception/list screen 1800A shown in Fig. 22 includes the handout display section 1811 corresponding to the handout NV11 provided by the exhibition company COM1, and the handout display section 1813 corresponding to the handout NV21 provided by the exhibition company COM2. The handout display section 1812 corresponding to the handout NV12 provided by the exhibition company COM1 and the handout display section 1814 corresponding to the handout NV22 provided by the exhibition company COM2 are omitted. The reception conditions for receiving the handouts NV11 and NV21 shown in Fig. 22 are different from the reception conditions for receiving the handouts NV11 and NV21 shown in Fig. 23.

In a case where the attribute of the recipient candidate participant is the non-member doctor PB, the handout notice/reception/list screen 1800A shown in Fig. 22 is displayed on the display screen of the display device 17 of the participant's terminal 120 of the recipient candidate participant.

The handout list display section 1801 of the handout notice/reception/list screen 1800A displays information noticing that the normal article NV11 as a handout is handed out by the provider participant COM1 and the normal article NV21 as a handout is handed out by the provider participant COM2. On the handout list display section 1801 and the reception right display section 2801 of the handout notice/reception/list screen 1800A, reception requests for receiving the normal articles NV11 and NV21 as handouts are received and reception rights to receive the normal articles NV11 and NV21 are granted. The handout list display section 1801 of the handout notice/reception/list screen 1800A displays a handout list. The handout list, however, displays limited display content. Specifically, in the handout list, only the normal articles NV11 and NV21 are displayed as handout items and the special articles NV12 and NV22 are not displayed. While participating in an event, therefore, the recipient candidate participant having the attribute of the non-member doctor PB can acquire information of a provider participant's providing the recipient candidate participant with the normal articles NV11 and NV21, from information displayed on the display screen of the participant's terminal 120, but cannot acquire information of the provider participant's providing the recipient candidate participant with the special articles NV12 and NV22.

In a case where the attributes of the recipient candidate participant are the doctor PA1 belonging to the medical society and the invited presenter PA2, the handout notice/reception/list screen 1800B shown in Fig. 23 is displayed on the display screen of the display device 17 of the participant's terminal 120 of the recipient candidate participant.

The handout list display section 1801 of the handout notice/reception/list screen 1800B displays information noticing that the normal article NV11 and special article NV12 as handouts are handed out by the provider participant COM1 and the normal article NV21 and special article NV22 as handouts are handed out by the provider participant COM2. On the handout list display section 1801 and the reception right display section 2801 of the handout notice/reception/list screen 1800B, reception requests for receiving the normal articles NV11 and NV21 and the special articles NV12 and NV22 as handouts are received and reception rights to receive the normal articles NV11 and NV21 and the special articles NV12 and NV22 are granted. The handout list display section 1801 of the handout notice/reception/list screen 1800B displays a handout list. In the handout list, the normal articles NV11 and NV21 and the special articles NV12 and NV22 are displayed as handout items, which are all the handouts provided by the provider participant. The recipient candidate participant having the attributes of the doctor PA1 belonging to the medical society and the invited presenter PA2, therefore, can acquire information on all handouts (the normal articles NV11 and NV21 and the special articles NV12 and NV22) provided by the provider participant during the event, from the display screen of the participant's terminal 120.

In a case where the attributes of the recipient candidate participant are the auditor PC and the exhibition company PD, the handout notice screen, the handout reception screen, and the handout list screen are not displayed on the display screen of the display device 17 of the participant's terminal 120 of the recipient candidate participant having the attributes of the auditor PC and the exhibition company PD. The recipient candidate participant having the attributes of the auditor PC and the exhibition company PD, therefore, cannot acquire information of the provider participant's providing the recipient candidate participant with handouts (the normal articles NV11 and NV21 and the special articles NV12 and NV22) during the event, from the display screen of the participant's terminal 120.

### (Sixth Embodiment)

In the sixth embodiment, expected contribution degrees indicating degrees of recipient candidate participants' expected contributions to a provider participant and contribution degrees indicating degrees of recipient candidate participants' contributions to a provider participant are classified in advance into rank categories, and reception rights to receive handouts, display of the handout notice screen, display of the handout reception screen, and display of the handout list screen are classified in advance into level categories. Thus, a reception right corresponding to a rank of expected contribution degree and a rank of contribution degree is granted, and the handout notice screen, the handout reception screen, and the handout list screen are displayed at their respective display levels corresponding to the rank of expected contribution degree and the rank of contribution degree.

An online event handout providing system according to the sixth embodiment will hereinafter be described.

The same matters as described in the fifth embodiment will be omitted in further description, when necessary.

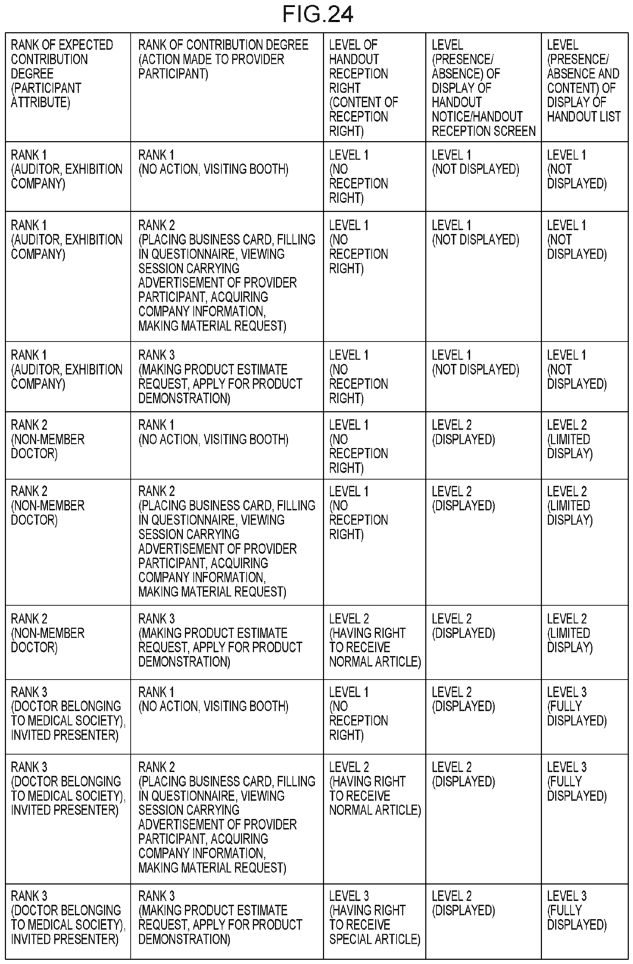

Fig. 24, which corresponds to Fig. 21, is a table showing data stored in a handout reception right storage unit 6003 of the sixth embodiment, which will be described later, and data for display control. Fig. 24 shows ranks of expected contribution degrees and contribution degrees, and levels of reception rights, display of the handout notice screen, display of the handout reception screen, and display of the handout list screen classified in the sixth embodiment.

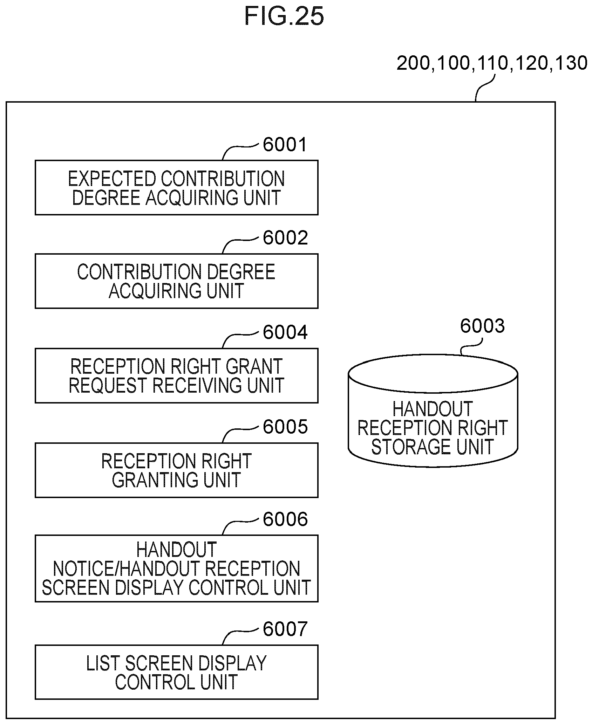

Fig. 25 is a block diagram exemplarily showing a functional configuration of the online event handout providing system according to the sixth embodiment. The server 200, the manager's terminal 100, the presenter's terminal 110, the participant's terminal 120, and the exhibition institution's terminal 130 each have the functional configuration shown in Fig. 25.

The online event handout providing system includes an expected contribution degree acquiring unit 6001, a contribution degree acquiring unit 6002, a handout reception right storage unit 6003, a reception right grant request receiving unit 6004, a reception right granting unit 6005, a handout notice/handout reception screen display control unit 6006, and a list screen display control unit 6007.

### (Expected Contribution Degree Acquiring Unit)

The expected contribution degree acquiring unit 6001 acquires an attribute of a recipient candidate participant, the attribute indicating a participant category in an online event, as an expected contribution degree indicating a degree of the recipient candidate participant's expected contribution to a provider participant.

As shown in Fig. 24, expected contribution degrees are classified into a plurality of rank categories, e.g., rank 1, rank 2, and rank 3, in accordance with attributes of the recipient candidate participant.

### (Expected Contribution Degree Acquiring Unit)

In accordance with an action the recipient candidate participant has made to the provider participant in the online event, the contribution degree acquiring unit 6002 acquires a contribution degree indicating a degree of the recipient candidate participant's contribution to the provider participant, in association with the recipient candidate participant.

As shown in Fig. 24, contribution degrees are classified into a plurality of rank categories, e.g., rank 1, rank 2, and rank 3, in accordance with the contents of actions the recipient candidate participant has made to the provider participant.

### (Handout Reception Right Storage Unit)

The handout reception right storage unit 6003 stores reception rights to receive the handout that are set to a plurality of levels in accordance with expected contribution degrees and contribution degrees.

As shown in Fig. 24, the stored reception rights to receive the handout are classified into a plurality of rank categories, e.g., rank 1, rank 2, and rank 3, in accordance with expected contribution degrees and contribution degrees.

In the case of handouts provided by the exhibition company COM1, i.e., a provider participant, for example, the contents of reception rights to receive the handout are level 1 (no reception right), level 2 (allowed to receive the normal article NV11), and level 3 (allowed to receive the special article NV12).

As shown in Fig. 24, when the rank of the expected contribution degree and that of the contribution degree of the recipient candidate participant vary, the level of the reception right to receive the handout and the content of the reception right corresponding to the level vary, accordingly. For example, even when a participant who is the auditor PC of the rank 1 category makes the action "making a product estimate request" of the rank 3 category, the level of the reception right to receive the handout is level 1 and therefore the content of the reception right remains "no reception right". When a participant who is the non-member doctor PB of the rank 2 category makes the same action "making a product estimate request" of the rank 3 category, on the other hand, the participant is able to acquire the reception right of the level 2 category "allowed to receive the normal article NV11". When a participant who is the doctor PA1 belonging to the medical society, the doctor PA1 being of the rank 3 category, makes the same action "making a product estimate request" of the rank 3 category, the participant is able to acquire the reception right of the level 3 category "allowed to receive the special article NV12 (which is more expensive than the normal article NV11)".

When a participant who is the doctor PA1 belonging to the medical society, the doctor PA1 being of the rank 3 category, makes the action "placing a business card" of the rank 2 category, the participant is able to acquire the reception right of the level 2 category "allowed to receive the normal article NV11". Even if a participant who is the non-member doctor PB of the rank 2 category or the auditor PC of the rank 1 category makes the same action "placing a business card" of the rank 2 category, the level of the reception right the participant acquires remains level 1 "no reception right", that is, the participant is not able to acquire the reception right of the level 2 category "allowed to receive the normal article NV11".

### (Reception Right Grant Request Receiving Unit)

The reception right grant request receiving unit 6004 receives a request for being granted a handout reception right, from the recipient candidate participant. The reception right grant request receiving unit 6004 is the same as the reception right grant request receiving unit 5004 of the fifth embodiment, and therefore description of the reception right grant request receiving unit 6004 will be omitted.

### (Reception Right Granting Unit)

From the handout reception right storage unit 6003, the reception right granting unit 6005 extracts a handout reception right with a level corresponding (in rank) to an expected contribution degree acquired in association with a recipient candidate participant whose request for being granted a handout reception right has been received by the reception right grant request receiving unit 6004 and to a contribution degree acquired in association with the recipient candidate participant. The reception right granting unit 6005 then grants the extracted handout reception right with the level to the recipient candidate participant.

Whether or not to grant the handout reception right is determined according to the rank of the expected contribution degree and that of the contribution degree of the recipient candidate participant using participant's terminal 120, the rank being shown in Fig. 24.

A case is assumed where a handout that a recipient candidate participant having the attribute of the non-member doctor PB of the rank 2 category wants is the item "normal article NV11". When the recipient candidate participant having the attribute of the non-member doctor PB of the rank 2 category has made the action of the rank 3 category "making a product estimate request", the recipient candidate participant satisfies a condition for being granted the reception right of the level 2 category "allowed to receive a normal article NV11". When it is determined that the recipient candidate participant satisfies this condition, the recipient right to receive the handout item "normal article NV11" is granted, on the handout notice/reception/list screen 1800A shown in Fig. 22, to the recipient candidate participant having the attribute of the non-member doctor PB. For example, on a reception right display section 2801 of the handout notice/reception/list screen 1800A, a notice of having granted the reception right to receive the handout item "normal article NV11" is displayed.

The same process is carried out also in a case where a recipient candidate participant having the attribute of the doctor PA1 belonging to the medical society, the doctor PA1 being of the rank 3 category, wants to receive the handout item "special article NV12". When the recipient candidate participant having the attribute of the doctor PA1 belonging to the medical society, the doctor PA1 being of the rank 3 category, has made the action of the rank 3 category "making a product estimate request", the recipient candidate participant satisfies a condition for being granted the reception right of the rank 3 category "allowed to receive the special article NV12". When it is determined that the recipient candidate participant satisfies this condition, the reception right to receive the handout item "special article NV12" is granted, on the handout notice/reception/list screen 1800B shown in Fig. 23, to the recipient candidate participant having the attribute of the doctor PA1 belonging to the medical society. For example, on the reception right display section 2801 of the handout reception request receiving screen 1800B, a notice of having granted the reception right to receive the handout item "special article NV12" is displayed.

### (Handout Notice Screen Display Control Unit, Handout Reception Screen Display Control Unit, and Handout List Screen Display Control Unit)

The handout notice/handout reception screen display control unit 6006 displays, on the display device 17 of the participant's terminal 120, a handout notice screen for noticing a recipient candidate participant of a handout that a provider participant provides to the recipient candidate participant. The handout notice/handout reception screen display control unit 6006 displays also, on the display device 17 of the participant's terminal 120, a handout reception screen for receiving a handout reception request from the recipient candidate participant.

The handout list screen display control unit 6007 displays, on the display device 17 of the participant's terminal 120, a handout list screen indicating a list of handouts the provider participant provides to recipient candidate participants.

In accordance with the expected contribution degree of the recipient candidate participant, the handout notice/handout reception screen display control unit 6006 controls the presence/absence of display of the handout notice screen and the same of the handout reception screen on the display screen of the participant's terminal 120 of the recipient candidate participant.

In accordance with the expected contribution degree of the recipient candidate participant, the handout list screen display control unit 6007 controls the content of display level of the handout list screen and the presence/absence of display of the same on the display screen of the participant's terminal 120 of the recipient candidate participant.

As shown in Fig. 24, display levels of the handout notice screen and display levels of the handout reception screen are classified into level 1 and level 2 categories. Display levels of the handout list screen are classified into level 1, level 2, and level 3 categories.

As shown in the handout notice/reception/list screens 1800A and 1800B of Figs. 22 and 23, the handout notice screen, the handout reception screen, and the handout list screen are displayed at the level corresponding to the rank of the contribution degree of the recipient candidate participant using the participant's terminal 120.

### (Seventh Embodiment)

An embodiment of the online event handout delivery system to which the fifth embodiment or the sixth embodiment is applied will hereinafter be described.

The online event handout delivery system can be implemented by, for example, mutually transmitting and receiving data between terminal devices via a communication network, such as the Internet.

Steps of the online event handout delivery system will be described. Similarly to the description of the fifth embodiment or the sixth embodiment, the online event handout delivery system will be described on the assumption that the support companies COM1 and COM2 of an online event are provider participants who provide handouts to participants at the online event.

### - Step 1 (register a handout)

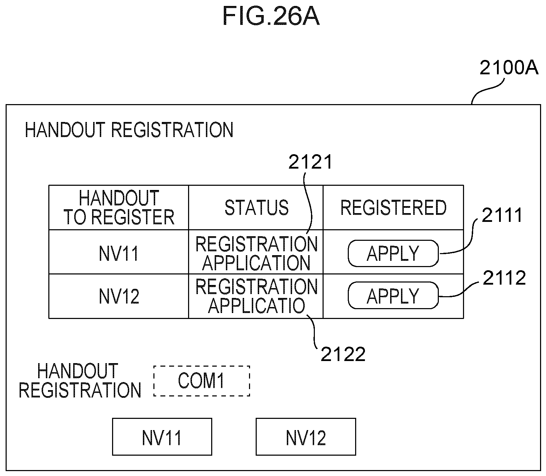

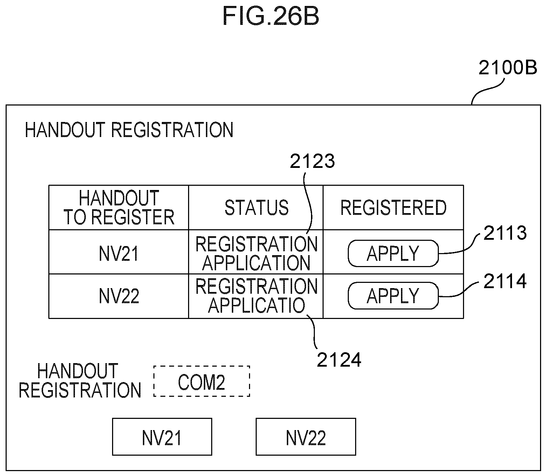

Figs. 26A and 26B show handout registration screens 2100A and 2100B displayed on the display screen of the display device 17 of the exhibition institution's terminal 130 of each of the provider participants COM1 and COM2, respectively.

The handout registration screens 2100A and 2100B are screens for registering a handout provided at the online event.

On the handout registration screen 2100A, registration application buttons 2111 and 2112 and statuses 2121 and 2122 are displayed in association with application handouts NV11 and NV12, respectively.

Similarly, on the handout registration screen 2100B, registration application buttons 2113 and 2114 and statuses 2123 and 2124 are displayed in association with application handouts NV21 and NV22, respectively.

The provider participant COM1 selects the handouts NV11 and NV12 at the current online event B. The selected handouts NV11 and NV12 are displayed as the application handouts NV11 and NV12, on the handout registration screen 2100A. When the registration application buttons 2111 and 2112 are pressed, the statuses 2121 and 2122 are displayed as "applied", respectively. As a result, information on the application handouts NV11 and NV12 is displayed on the display device 17 of the manager's terminal 100 of the manager (administrator) of the online event B. When the manager (administrator) of the online event B executes an operation of approving registration of the application handouts NV11 and NV12, the statuses 2121 and 2122 of the application handouts NV11 and NV12 are updated to "registered".

In the same manner, the provider participant COM2 selects the handouts NV21 and NV22 at the current online event B. The selected handouts NV21 and NV22 are displayed as the application handouts NV21 and NV22, on the handout registration screen 2100B. When the registration application buttons 2113 and 2114 are pressed, the statuses 2123 and 2124 are displayed as "applied", respectively. As a result, information on the application handouts NV21 and NV22 is displayed on the display device 17 of the manager's terminal 100 of the manager (administrator) of the online event B. When the manager (administrator) of the online event B executes an operation of approving registration of the application handouts NV21 and NV22, the statuses 2123 and 2124 of the application handouts NV21 and NV22 are updated to "registered".

In application for handout registration, registration of the number of handouts to be provided may be applied for. For example, registration of the application handout NV11 may be applied for, with the number of application handouts NV11 (e.g., 10) to be provided being associated with the application handout NV11.

Another configuration is also possible, in which a handout is selected from a list of products presented in advance and registration of the selected product is applied for. For example, a local industry company, which is a member of the chamber of commerce in a region where the event (scientific-society-hosted academic lecture) is held, presents a list of products, such as local special products, that can be used as handout items, to the support companies COM1 and COM2 of the scientific-society-hosted academic lecture.

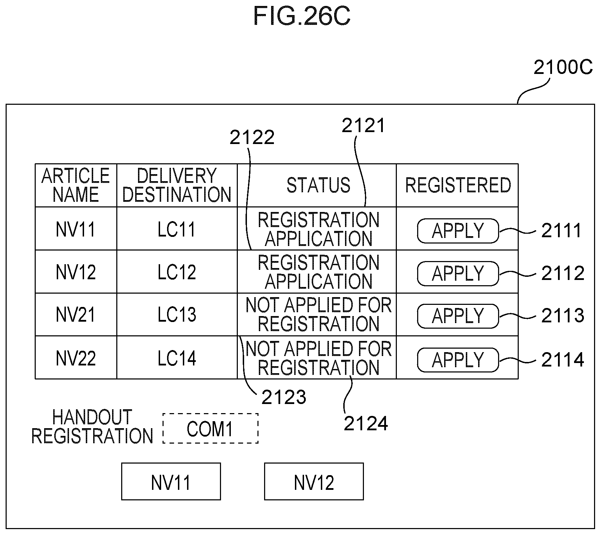

Fig. 26C exemplarily shows a handout registration screen 2100C.

The handout registration screen 2100C is displayed on the display device 17 of the exhibition institution's terminal 130 of each of the provider participants COM1 and COM2.

The handout registration screen 2100C displays manufacturers LC1, LC2, LC3, and LC4, registration application buttons 2111, 2112, 2113, and 2114, and statuses 2121, 2122, 2123, and 2124 that are association with product names NV11, NV12, NV21, and NV22, respectively.

The provider participant COM1 selects the application handouts NV11 and NV12 at the current online event B, out of the products NV11, NV12, NV21, and NV22. In the same manner, the provider participant COM2 selects the application handouts NV21 and NV22 at the current online event B, out of the products NV11, NV12, NV21, and NV22.

For example, by pressing the registration application button 2111 associated with the handout NV11, the provider participant COM1 makes registration application to register the handout NV11 as a handout provided by the provider participant COM1 at the current online event B. In the same manner, by pressing the registration application button 2112 associated with the handout NV12, the provider participant COM1 makes registration application to register the handout NV12 as a handout provided by the support company COM1 at the current online event B. When registration of the application handouts NV11 and NV12 is approved, the statuses 2121 and 2122 are updated to "registered".

By the same process, the provider participant COM2 is able to apply for, for example, registration of the application handouts NV21 and NV22 and after getting an approval of the registration, register the application handouts NV21 and NV22, on the handout registration screen 2100C.

The registered handouts NV11, NV12, NV21, and NV22 are associated with reception conditions shown in the table of Fig. 21 or Fig. 24, as described in the fifth embodiment or the sixth embodiment.

### - Step 2 (handout management)

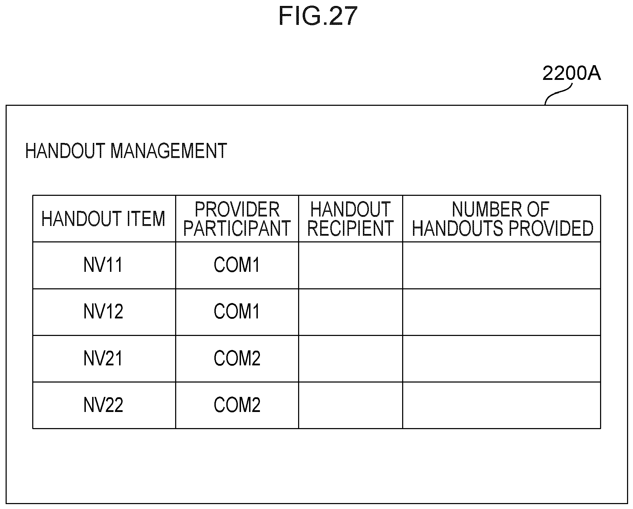

Registered handouts are displayed on a handout management screen 2200A, as shown in Fig. 27.

The handout management screen 2200A is displayed on the display device 17 of the manager's terminal 100 of the manager (administrator) of the online event B.

The handout management screen 2200A displays the provider participants COM1 and COM2, handout recipients (recipient candidate participants), and the numbers of handouts provided that are association with the registered handout items NV11, NV12, NV21, and NV22, respectively.

After the end of the online event B, the handout recipients (recipient candidate participants) and the number of handouts provided are determined.

As a result, in a case where registration application is made with the number of handouts to be provided is associated with the application handout, whether the number of handouts to be provided is within the actual number of handouts provided can be checked. For example, when the number of the application handouts NV11 to be provided is 10 and the actual number of handouts provided during a period of the online event B being held is 2, it can be determined that handout providing has been carried out according to the registration application.

### - Step 3 (receive a handout reception request and grant a reception right)

As described in the fifth embodiment or the sixth embodiment, the handout notice/reception/list screen 1800A shown in Fig. 22 or the handout notice/reception/list screen 1800B shown in Fig. 23 displays a list of registered handouts with which reception conditions are associated, and a notice of receiving a handout reception request from a recipient candidate participant and granting a right to receive the handout to the recipient candidate participant when the recipient candidate participant satisfies a reception condition.

From the list of handouts shown in the handout notice/reception/list screen 1800A of Fig. 22 or the handout notice/reception/list screen 1800B of Fig. 23, a handout is selected, and a handout reception request is received, and then, when a reception condition is satisfied, a right to receive the handout is granted.

### - Step 4 (generating a delivery list)

Handout reception requests are closed, for example, at the point at which the period of the online event B being held comes to an end.

At the point at which handout reception requests are closed, the handout recipients (recipient candidate participants) of the registered handout items NV11, NV12, NV21, and NV22 and the number of handouts provided are determined.

It is assumed that during the period of the online event B being held, recipient candidate participants (users) U11, U12, U13, and U14 make the following reception requests and are granted reception rights. Granting the recipient candidate participants the handout reception rights confirms handout providing.

### - User U11

One handout item NV11 was ordered separately on the 5th day of month N in the period of the online event B being held. In addition, one handout item NV21 was ordered separately on the 7th day of month N in the period of the online event B being held. The user U11's home address was specified as the delivery destination. Information indicating the home address, name, and telephone number of the user U11, i.e., the delivery destination, is defined as ADR11.

### - User U12

One handout item NV11 was ordered separately on the 6th day of month N in the period of the online event B being held. The user U11's home address was specified as the delivery destination. Information indicating the home address, name, and telephone number of the user U12, i.e., the delivery destination, is defined as ADR12.

### - User U13

One handout item NV12 and one handout item NV22 were ordered together. The day when the handout items were ordered was the 10th day of month N in the period of the online event B being held. The user U11's home address was specified as the delivery destination. Information indicating the home address, name, and telephone number of the user U13, i.e., the delivery destination, is defined as ADR13.

### - User U14

One handout item NV21 was ordered separately on the 8th day of month N in the period of the online event B being held. The user U11's home address was specified as the delivery destination. Information indicating the home address, name, and telephone number of the user U14, i.e., the delivery destination, is defined as ADR14.

### - User U15

One handout item NV21 was ordered separately on the 9th day of month N in the period of the online event B being held. The user U15's home address "ADR15" was specified as the delivery destination. Information indicating the home address, name, and telephone number of the user U15, i.e., the delivery destination, is defined as ADR15.

### - User U16

One handout item NV22 was ordered together with a different handout item. The day when the handout items were ordered was the 10th day of month N in the period of the online event B being held. The user U11's home address was specified as the delivery destination. Information indicating the home address, name, and telephone number of the user U16, i.e., the delivery destination, is defined as ADR16.

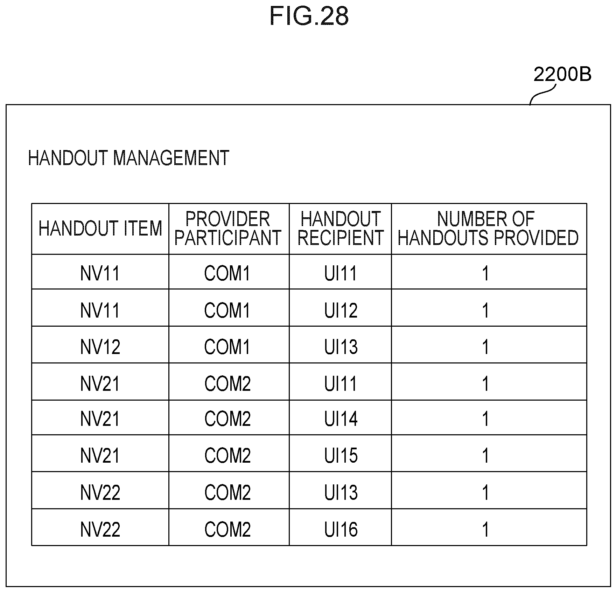

Fig. 28 shows a handout management screen 2200B that results when handout recipients and the numbers of handouts provided are determined. The handout management screen 2200B is displayed on the display device 17 of the manager's terminal 100 of the manager (administrator) of the online event B.

The handout management screen 2200B displays the provider participants "COM1, COM2", user identification information "UI11, UI12, UI13, UI14, UI15, UI16" indicating users "U11, U12, U13, U14, U15, U16" as handout recipients (recipient candidate participants), and the numbers of handouts provided "2, 1, 3, 2" that are associated with the registered handout items "NV11, NV12, NV21, and NV22".

Pieces of the user identification information "UI11, UI12, UI13, UI14, UI15, UI16" are merely information for specifying users, such as user names, and do not include personal information, such as home addresses and telephone numbers.

The manager (administrator) is thus able to acquire information that the provider participant COM1 has provided one handout item NV11 to the user U11 and to the user U12, that is, has provided two handout items NV11 in total.

The manager (administrator) is also able to acquire information that the provider participant COM1 has provided one handout item NV12 to the user U13.

The manager (administrator) is also able to acquire information that the provider participant COM2 has provided one handout item NV21 to the user U11, to the user U14, and to the user U15, that is, has provided three handout items NV21 in total.

The manager (administrator) is also able to acquire information indicating that the provider participant COM2 has provided one handout item NV22 to the user 13 and to the user U16, that is, has provided two handout items NV22 in total.

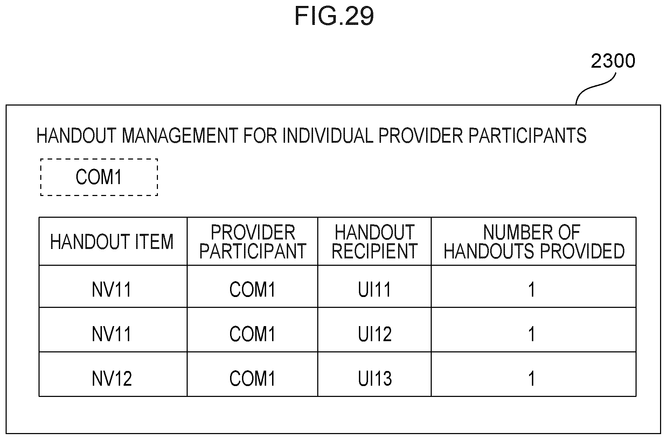

Fig. 29 shows a handout management screen for individual provider participants 2300. The handout management screen for individual provider participants 2300 is displayed on the display device 17 of the exhibition institution's terminal 130 of a provider participant (e.g., the support company COM1).

The handout management screen for individual provider participants 2300 displays user identification information "UI11, UI12, UI13" indicating users "U11, U12, U13" as handout recipients (recipient candidate participants) and the numbers of handouts provided "2, 1" that are associated with the handout items "NV11, NV12" registered by a provider participants (e.g., the support company COM1).

The provider participant COM1, therefore, can acquire information that one handout item NV11 has been provided to the user U11 and to the user U12, that is, two handout item NV11 have been provided in total.

The provider participant COM1 can also acquire information that one handout item NV12 has been provided to the user U13.

A delivery list will then be described. The delivery list is created in order to deliver a handout from a delivery operator to a delivery destination.

The delivery list is updated each time a reception right is granted, and is confirmed as a final delivery list at the point at which reception of requests for being granted a reception right are closed (e.g., at the end of the period of the online event B being held).

The handout delivery operator is determined in any one of the following cases.
- Each of the manufacturers LC1, LC2, LC3, and LC4 is the delivery operator.
- A delivery firm is the delivery operator.
- A provider participant (support company COM1 or COM2) is the delivery operator.
- Combination of two or three of the above cases
   (Case where each of the manufacturers LC1, LC2, LC3, and LC4 is the delivery operator)

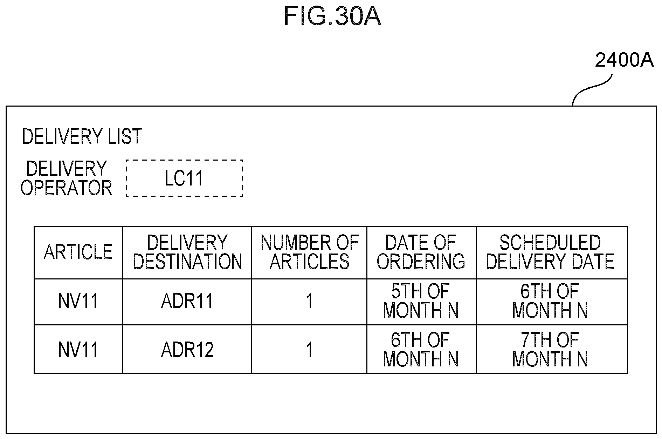

Fig. 30A shows a delivery list screen 2400A. The delivery list screen 2400A is displayed on the display device 17 of the terminal of the local industry company LC1, which is the delivery operator (not illustrated).

The delivery list screen 2400A displays the addresses of delivery destinations each association with an article for which a reception right has been granted.

The delivery list screen 2400A displays information on delivery destinations (ADR11, ADR12), the number of articles (1 for each delivery, i.e., 2 in total), ordering dates (5th of N month, 6th of N month), and scheduled delivery dates (6th of N month, 7th of N month) that are associated respectively with the article NV11.

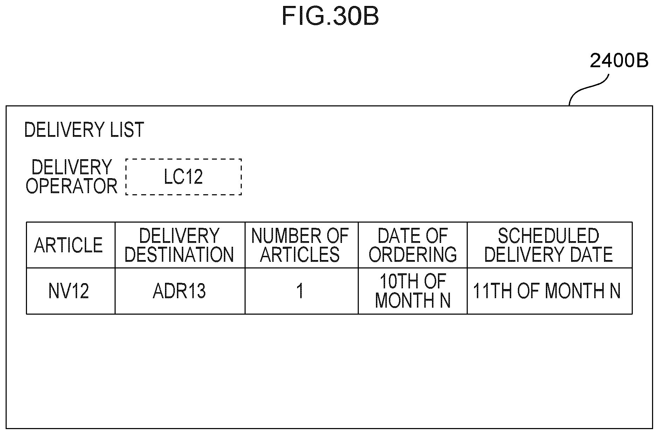

A delivery list screen 2400B shown in Fig. 30B, as in the case of the delivery list screen 2400A, is displayed on the display device 17 of the terminal of the local industry company LC2, which is the delivery operator (not illustrated).

The delivery list screen 2400B displays information on delivery destinations (ADR13), the number of articles (1), an ordering date (10th of N month), and a scheduled delivery date (11th of N month) that are associated with the article NV12.

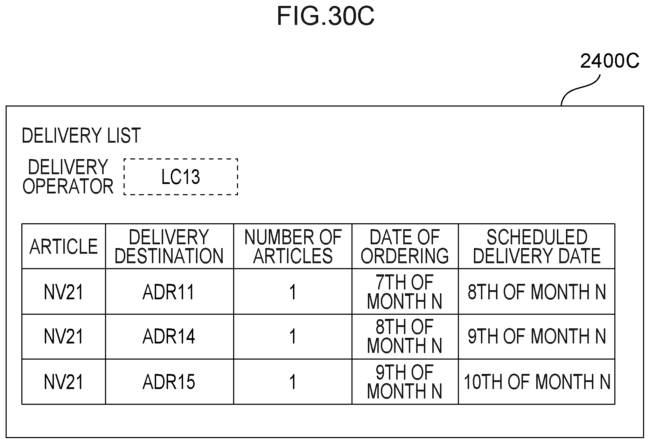

A delivery list screen 2400C shown in Fig. 30C, as in the case of the delivery list screen 2400B, is displayed on the display device 17 of the terminal of the local industry company LC3, which is the delivery operator (not illustrated).

The delivery list screen 2400C displays information on delivery destinations (ADR11, ADR14, ADR15), the number of articles (1 for each delivery, i.e., 3 in total), ordering dates (7th of N month, 8th of N month, 9th of N month), and scheduled delivery dates (8th of N month, 9th of N month, 10th of N month) that are associated respectively with the article NV21.

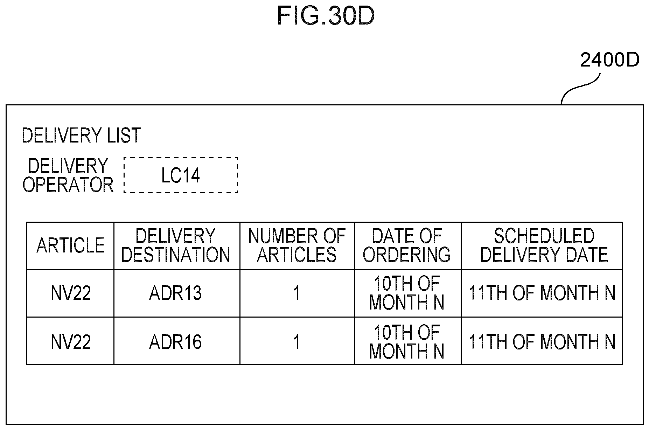

A delivery list screen 2400D shown in Fig. 30D, as in the case of the delivery list screen 2400C, is displayed on the display device 17 of the terminal of the local industry company LC4, which is the delivery operator (not illustrated).

The delivery list screen 2400D displays information on delivery destinations (ADR13, ADR16), the number of articles (1 for each delivery, i.e., 2 in total), an ordering dates (10th of N month), and a scheduled delivery date (11th of N month) that are associated respectively with the article NV22.

### (Case where a delivery firm is the delivery operator)

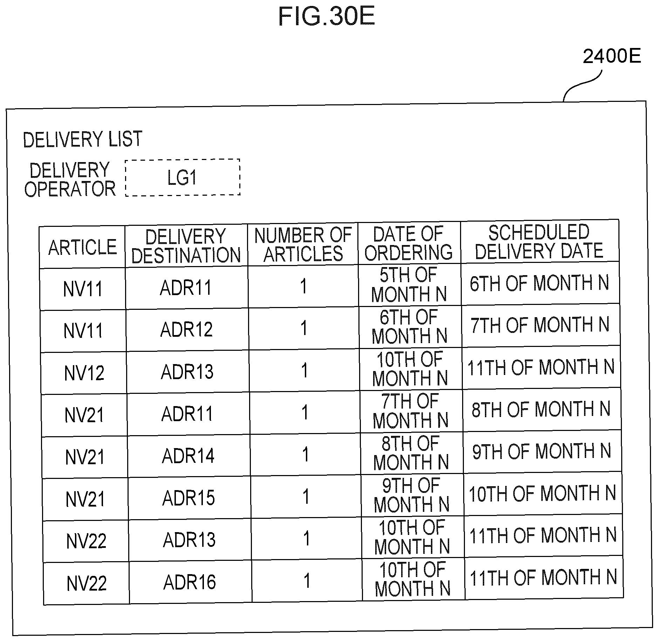

A delivery list screen 2400E shown in Fig. 30E is displayed on the display device 17 of the terminal of a delivery firm LG1, which is a delivery operator (not illustrated).

The delivery list screen 2400E shows a delivery list created by integrating together the delivery lists of the delivery list screens 2400A, 2400B, 2400C, and 2400D.

### (Case where a provider participant is the delivery operator)

The handout management screen for individual provider participants 2300 (the screen created at the point at which reception of requests for being granted a reception right are closed) shown in Fig. 29 is a delivery list of handouts provided by the provider participant COM1. It should be noted that information displayed on the handout management screen for individual provider participants 2300 is limited such that personal information, such as the home addresses and telephone numbers of recipient candidate participants, is not included in the displayed information. This applies also to a delivery list of the provider participant COM2.

### - Step 5 (deliver handouts)

### (Case where a manufacturer is the delivery operator)

Each of the manufacturers (e.g., local industry companies) LC1, LC2, LC3, and LC4 requests a delivery agent to make deliveries according to the information displayed on the delivery list screens 2400A, 2400B, 2400C, and 2400D. Meeting the request, the delivery agent delivers handouts to addresses specified by the users U11, U12, U13, U14, U15, and U16 who are granted handout reception rights, respectively.

### (Case where a delivery firm is the delivery operator)

According to the delivery list screen 2400E, a delivery firm LG1 collects articles from the manufacturers (local industry companies) LC1, LC2, LC3, and LC4, and delivers the articles (handouts) to addresses specified by the users U11, U12, U13, U14, U15, and U16 who are granted handout reception rights, respectively.

### (Case where a provider participant is the delivery operator)

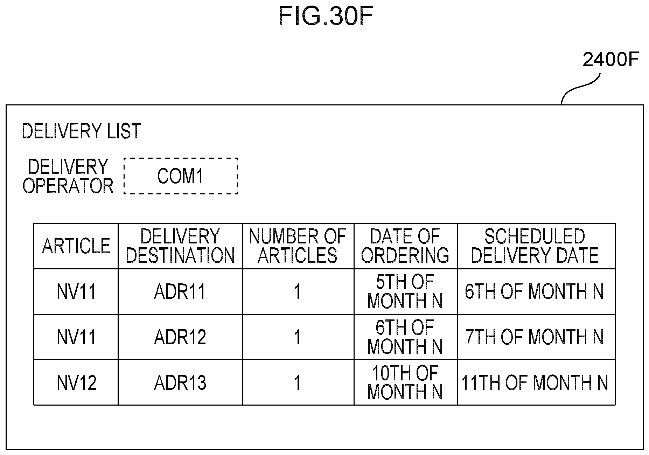

A delivery list screen 2400F shown in Fig. 30 F is displayed on the display device 17 of the terminal of a delivery agent (not illustrated). The delivery list screen 2400F corresponds to the delivery list of the provider participant COM1. The delivery list screen 2400F shows a list of handouts provided by the provider participant COM1, the list being extracted from the delivery list of the delivery list screen 2400E.

According to the delivery list of the provider participant COM1 shown on the delivery list screen 2400F, the delivery agent delivers handouts to addresses specified by the users U11, U12, and U13 who are granted handout reception rights, respectively.

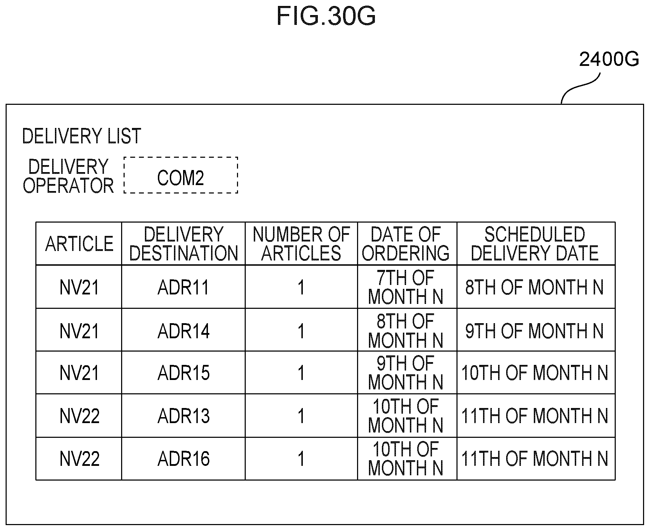

A delivery list screen 2400G shown in Fig. 30G, as in the case of the delivery list screen 2400F, is displayed on the display device 17 of the terminal of the delivery agent (not illustrated). The delivery list screen 2400G corresponds to a delivery list of the provider participant COM2. The delivery list screen 2400G shows a list of handouts provided by the provider participant COM2, the list being extracted from the delivery list of the delivery list screen 2400E.

According to the delivery list of the provider participant COM2 shown on the delivery list screen 2400G, the delivery agent delivers handouts to addresses specified by the users U11, U13, U14, U15, and U16 who are granted handout reception rights, respectively.

As a result, each user is able to receive a handout in the following manner.

### - User U11

At the home address (ADR11), the user U11 received one handout item NV11 on the 6th of month N, which handout item NV11 was ordered separately on the 5th of month N during the period of the online event B being held. At the home address (ADR11), the user U11 received one handout item NV21 on the 8th of month N, which handout item NV21 was ordered separately on the 7th of month N during the period of the online event B being held.

### - User U12

At the home address (ADR12), the user U12 received one handout item NV11 on the 7th of month N, which handout item NV11 was ordered separately on the 6th of month N during the period of the online event B being held.

### - User U13

At the home address (ADR13), the user U13 received one handout item NV12 and one handout item NV22 on the 11th of month N following the end of the period of the online event B being held (the online event B ended on the 10th of month N), which handout items NV12 and NV22 were ordered together.

### - User U14

At the home address (ADR14), the user U14 received one handout item NV21 on the 9th of month N, which handout item NV21 was ordered separately on the 8th of month N during the period of the online event B being held.

### - User U15

At the home address (ADR15), the user U15 received one handout item NV21 on the 10th of month N, which handout item NV21 was ordered separately on the 9th of month N during the period of the online event B being held.

### - User U16

At the home address (ADR16), the user U16 received one handout item NV22 on the 11th of month N following the end of the period of the online event B being held (the online event B ended on the 10th of month N), which handout item NV22 was ordered together with a different handout item.

According to the online event handout delivery system of the present embodiment, compared with conventional cases, an effect of reducing burdens resulting from selecting a handout, transferring handouts to the venue, delivering handouts to participants, and bringing handouts home can be obtained. In addition, the provider participant (support company or the like) and the manager of the event can acquire information on how many handouts were provided to which participant during the event period.

The disclosure of Japanese Patent Application No. 2021-89493 filed on May 27, 2021 is entirely incorporated herein by reference.

All documents, patent applications, and technical standards described in this specification are incorporated herein by reference to the same extent as the extent to which individual documents, patent applications, and technical standards are incorporated by reference in individual cases where reference-based incorporation of documents, patent applications, and technical standards is stated specifically.

### Reference Signs List

- 1001: conference holding information input unit
- 1002: conference holding screen generating unit
- 1003: preparation status updating unit
- 1004: contact document generating unit
- 1005: transmitting unit
- 2002: setting unit
- 2003: receiving unit
- 2004: acquiring unit
- 2005: determining unit
- 2006: display control unit
- 3001: recording unit
- 3002: novelty reception condition receiving unit
- 3003: reception request receiving unit
- 3004: determining unit
- 3005: reception right granting unit

## Claims

1. A conference management system, comprising:
a conference information input unit that inputs conference holding information on a conference preparation screen, the conference information including a content of a conference, and a name of a presenter and a role of the presenter at the conference;
a conference screen generating unit that generates a conference screen, based on the conference information input by the conference information input unit;
a preparation status updating unit that updates a preparation status of the presenter;
a contact document generating unit that generates a contact document in accordance with the role of the presenter and the preparation status of the presenter, based on the conference information input by the conference information input unit and on the preparation status of the presenter updated by the preparation status updating unit; and
a transmitting unit that transmits the contact document generated by the contact document generating unit, to a corresponding presenter.

2. An exhibition system, comprising:
a setting unit that sets a display condition in association with an attribute of a participant, the display condition being a condition under which an exhibition institution displays specific display information on the participant's terminal;
a receiving unit that receives a display request for the specific display information, from a participant;
an acquiring unit that acquires an attribute of the participant whose display request is received by the receiving unit;
a determining unit that determines whether a display condition associated with the attribute of the participant acquired by the acquiring unit is satisfied; and
a display control unit that causes display of the specific display information on the participant's terminal when the determining unit determines that the display condition is satisfied.

3. An exhibition system, comprising:
a recording unit that records an action a participant has made relative to an exhibition institution, the action being recorded in association with the participant;
a novelty reception condition receiving unit that receives a specific action from the exhibition institution, the specific action being defined as a reception condition for receiving a novelty provided by the exhibition institution;
a reception request receiving unit that receives a reception request for receiving the novelty, from a participant;
a determining unit that based on recorded content of the recording unit and on an attribute of a participant, determines that a participant whose reception request for receiving the novelty has been received satisfies the reception condition for receiving the novelty; and
a reception right granting unit that when the determining unit determines that the participant whose reception request for receiving the novelty has been received satisfies the reception condition for receiving the novelty, grants the participant a right for receiving the novelty.

4. An online academic conference management system that manages a plurality of online academic conferences, the system comprising:
a user information acquiring unit that acquires user information;
a participation information acquiring unit that for each online academic conference, acquires information indicating a right of participation of a user who participates in the online academic conference; and
a display control unit that causes display of management information on a user's terminal according to the information indicating a right of participation of the user, in such a way as to associate the management information with a plurality of online academic conferences in which the user participates.

5. The online academic conference management system according to claim 4, wherein the display control unit causes a user's terminal to display a list management screen showing a list of management information on a plurality of online academic conferences in which the user participates and a separate management screen showing management information on a separate online academic conference in which the user participates.

6. An online academic conference management system that manages a plurality of online academic conferences, the system comprising:
a user information acquiring unit that acquires user information;
a participation information acquiring unit that for each online academic conference, acquires information indicating a right of participation, the information indicating that a user participating in the online academic conference is an exhibitor configuring an exhibition institution, and information on an affiliation institution with which each exhibitor configuring included in the exhibition institution is affiliated; and
a display control unit that causes display of management information on a user's terminal in accordance with the information indicating a right of participation of the user, the management information including information on an exhibition institution, on each exhibitor configuring the exhibition institution, and on an affiliation institution with which each exhibitor is affiliated, in such a way as to associate the management information with an online academic conference in which the user participates.

7. The online academic conference management system according to claim 6, wherein the display control unit causes a user's terminal to display a list management screen showing a list of management information on a plurality of online academic conferences in which the user participates and a separate management screen showing management information on a separate online academic conference in which the user participates.

8. An online academic conference management system that manages a plurality of online academic conferences, the system comprising:
an information processing unit that generates management information as information that can be displayed on a user's terminal, the management information being provided according to a right of participation of the user and being associated with a plurality of online academic conferences in which the user participates, by using user information and information on the right of participation of the user for participating in each online academic conference.

9. An online academic conference management system that manages a plurality of online academic conferences, the system comprising:
an information processing unit that generates management information as information that can be displayed on a user's terminal, the management information being provided in accordance with a right of participation of the user, being associated with an online academic conference in which the user participates, and including information on an exhibition institution, on each exhibitor configuring the exhibition institution, and on an affiliation institution with which each exhibitor is affiliated, by using user information, information indcating the right of participation indicating that the user is an exhibitor configuring the exhibition institution, and information on the affiliation institution with which each exhibitor configuring the exhibition institution is affiliated.

10. An online event handout providing system in which a provider participant who provides a handout grants a recipient candidate participant a right to receive the handout, the system comprising:
a recipient candidate participant attribute acquiring unit that acquires an attribute of the recipient candidate participant;
an action acquiring unit that in association with the recipient candidate participant, acquires an action the recipient candidate participant has made relative to the provider participant;
a handout reception right storage unit that stores a right to receive the handout, in accordance with the attribute of the recipient candidate participant and a content of the action;
a reception right grant request receiving unit that receives a request to be granted a right to receive the handout, from the recipient candidate participant; and
a reception right granting unit that extracts a right to receive the handout, from the handout reception right storage unit, the right to receive the handout corresponding to the attribute of the recipient candidate participant acquired in accordance with the recipient candidate participant whose request to be granted the right to receive the handout has been received by the reception right grant request receiving unit and with the content of the action acquired in association with the recipient candidate participant, and grants the recipient candidate participant the right to receive the handout.

11. The online event handout providing system according to claim 10, further comprising:
a handout notice/handout reception screen display control unit that causes display of a handout notice/handout reception screen on a display screen of a recipient candidate participant's terminal, the handout notice/handout reception screen being used to notify the recipient candidate participant of a handout that a provider participant provides to the recipient candidate participant and/or to receive a reception request for receiving the handout, from the recipient candidate participant,
wherein, in accordance with a recipient candidate participant attribute of the recipient candidate participant, the handout notice/handout reception screen display control unit controls whether or not the handout notice/handout reception screen is displayed at the display screen of the recipient candidate participant's terminal.

12. The online event handout providing system according to claim 10 or claim 11, further comprising:
a handout list screen display control unit that causes display of a handout list screen on a recipient candidate participant's terminal, the handout list screen showing a list of handouts that a provider participant provides to the recipient candidate participant,
wherein, in accordance with a recipient candidate participant attribute of the recipient candidate participant, the handout list screen display control unit controls a displayed content of the handout list screen displayed on a display screen of the recipient candidate participant's terminal or whether or not the handout list screen is displayed at the display screen of the recipient candidate participant's terminal.

13. An online event handout providing system in which a provider participant who provides a handout grants a recipient candidate participant a right to receive the handout, the system comprising:
an expected contribution degree acquiring unit that acquires an expected contribution degree indicating a degree of an expected contribution that the recipient candidate participant makes relative to the provider participant;
a contribution degree acquiring unit that, in accordance with a content of an action the recipient candidate participant has made relative to the provider participant, acquires a contribution degree indicating a degree of a contribution that the recipient candidate participant makes relative to the provider participant, in association with the recipient candidate participant;
a handout reception right storage unit storing rights to receive the handout that are associated with a plurality of levels in accordance with the expected contribution degree and the contribution degree;
a reception right grant request receiving unit that receives a request to be granted a right to receive the handout, from the recipient candidate participant; and
a reception right granting unit that extracts a right to receive the handout, from the handout reception right storage unit, the right to receive the handout being at a level corresponding to an expected contribution degree acquired in association with the recipient candidate participant whose request to be granted the right to receive the handout has been received by the reception right grant request receiving unit and to a contribution level acquired in association with the recipient candidate participant, and grants the recipient candidate participant the right to receive the handout at the level corresponding to the expected contribution degree and the contribution degree.

14. The online event handout providing system according to claim 13, wherein the expected contribution degree is divided into a plurality of rank categories in accordance with attributes of recipient candidate participants.

15. The online event handout providing system according to claim 13 or claim 14, further comprising:
a handout notice/handout reception screen display control unit that causes display of a handout notice/handout reception screen on a display screen of a recipient candidate participant's terminal, the handout notice/handout reception screen being used to notify the recipient candidate participant of a handout that a provider participant provides to the recipient candidate participant, to receive a reception request to receive the handout from the recipient candidate participant, or any combination thereof,
wherein, in accordance with an expected contribution degree of the recipient candidate participant, the handout notice/handout reception screen display control unit controls whether or not the handout notice/handout reception screen is displayed at the display screen of the recipient candidate participant's terminal.

16. The online event handout providing system according to any one of claim 13 to claim 15, further comprising a handout list screen display control unit that causes display of a handout list screen on a recipient candidate participant's terminal, the handout list screen showing a list of handouts that a provider participant provides to the recipient candidate participant,
wherein, in accordance with an expected contribution degree of the recipient candidate participant, the handout list screen display control unit controls a display level of the handout list screen displayed on a display screen of the recipient candidate participant's terminal or whether or not the handout list screen is displayed at the display screen of the recipient candidate participant's terminal.

17. An online event handout delivery system, comprising:
a display device of a provider participant's terminal that displays a handout registration screen for registering a handout provided in an online event;
a display device of a recipient candidate participant's terminal that displays a handout list screen showing a list of registered handouts, the list having a reception condition associated with the handouts, and a handout reception screen for receiving a reception request to receive a handout, from the recipient candidate participant; and
a display device of a delivery operator's terminal that displays a delivery list screen showing a handout list that is a list of handouts for which a reception condition is satisfied, the handout list having information on a delivery destination associated therewith for delivering a handout to the delivery destination.
